# EUROPEAN PATENT SPECIFICATION

(11) **EP 4 565 878 B1**
(45) Date of publication and mention of the grant of the patent: **02.12.2026**
(21) Application number: 23748082.7
(22) Date of filing: 01.08.2023
(51) Int. Cl.: G01N 30/20, G01N 30/16, H01M 10/00, G01N 30/88, G01N 30/72

(54) **ASSEMBLY AND METHOD FOR SUPPLYING A GAS STREAM**
ANORDNUNG UND VERFAHREN ZUR BEREITSTELLUNG EINES GASSTROMS
ENSEMBLE ET PROCÉDÉ D'ALIMENTATION D'UN FLUX DE GAZ

(30) Priority: 02.08.2022 EP 22188274
(43) Date of publication of application: 11.06.2025
(73) Proprietor: Karlsruher Institut für Technologie, 76131 Karlsruhe (DE)
(72) Inventor: HOFMANN, Andreas, 76297 Stutensee (DE); SMITH, Anna, 76344 Eggenstein (DE); MÜLLER, Freya, 76297 Stutensee (DE); REUTER, Ingo, 76139 Karlsruhe (DE)
(74) Representative: Altmann Stößel Dick Patentanwälte PartG mbB
(86) International application number: PCT/EP2023/071274
(87) International publication number: WO 2024/028312

(56) References cited:
- EP-A1- 3 696 902
- CN-A- 114 414 698
- US-A1- 2018 299 414
- US-A1- 2021 366 735
- GREGORY GACHOT ET AL: "Gas Chromatography/Mass Spectrometry As a Suitable Tool for the Li-Ion Battery Electrolyte Degradation Mechanisms Study", ANALYTICAL CHEMISTRY, vol. 83, no. 2, 15 January 2011 (2011-01-15), pages 478 - 485, XP055045121, ISSN: 0003-2700, DOI: 10.1021/ac101948u

## Description

### Field of the invention

The present invention relates to an assembly and a method for supplying a gas stream, in particular from a sample or from a source of a calibration gas, to at least one analytical instrument as well as a related computer program, a system for determining at least one property of a gaseous component in the gas stream, and a use of the system for a quantitative measurement of the gaseous component in the gas stream, which may, exemplarily, be released by a chemical energy storage system.

### Related art

Although gases have a key importance in many processes, the handling of gases is often more challenging compared to solids and liquids. A major task is to transport a gas from a reaction site to an analysis tool without loss, chemical conversion and/or contamination. If quantitative measurements of an absolute gas amount are required, additional tools which concern calibration and determination of the absolute gas amount arise, are necessary. In principle, a wide variety of methods and devices for analyzing and quantifying gases are known. A widely used approach is gas chromatography, which may provide high sensitivity and accuracy with regard to gas identification and gas quantification. Further approaches include gas analyzers based on IR analysis, or electrochemical gas analyzers based on specific electrochemical reactions. For a rapid detection, semi-quantitative gas measuring tubes can be used, which are capable of detecting a gas by using a chemical reaction in a tube and quantifying an amount of the gas by using a flow of a constant quantity of air.

Chemical energy storage systems are an example in which gas processes are of elementary importance. A special case of energy storage systems are secondary batteries based on Li-ion or post-Li ion technologies. After assembling a Li-ion cell, gas evolution can occur under various instances, e.g. during cell formation, under normal cell operation and/or under abuse scenarios. Moreover, gassing of an operating cell may be an indicator for electrolyte decomposition under safety-relevant conditions, such as an overcharge that may lead to a thermal runaway. As described in P. Stenzel, F. Horsthemke, M. Winter and S. Nowak, Chromatographic Techniques in the Research Area of Lithium Ion Batteries: Current State-of-the-Art, Separations 2019, 6, 26 and B. Rowden and N. Garcia-Araez, A review of gas evolution in lithium ion batteries, Energy Reports 6 (2020) 10-18 in more detail, attempts were made to elucidate an understanding of gas formation in Li-ion cells, especially with respect to a precise determination of amounts of gas formed in a Li-ion cell and a quantitative analysis of individual gases. For this purpose, various combinations of methods have been used, such as a coupling of gas chromatography (GC) with FT-IR, FT-IR with special gas analyzers, FT-IR with µGC, or FT-IR with NDIR and paramagnetic analyzers, in particular since using the GC-MS technique alone, which is ideally suited for volatile organic solvents, exhibits, in practice, often limits for gas measurements.

US 2021/366735 A1 discloses an assembly and a method for supplying a gas stream, in particular from a sample or from a source of a calibration gas, to at least one analytical instrument. Still, a strong interest exists in detecting relevant gas species directly during cycling, preferably by using on-line mass spectroscopy (MS) for *in-situ* determination. Typical cells which are used today for *in-situ* gas analysis, in particular differential electrochemical mass spectrometry (DEMS) and/or online electrochemical mass spectrometry (OEMS), are specifically designed cells which are not comparable to commercial pouch-bag cells, prismatic cells, or round cells. For a gas-volume determination in a pouch-bag cell, two methods are commonly used: firstly, a determination by water displacement and, secondly, a determination using Archimedes' principle. However, both methods are elaborate for determining small volume changes, require specific equipment for cycling the pouch-bag cell under gas control, and cannot provide information about individual gas species. Moreover, a gas amount can be falsified by gas insertion into electrodes. Further, directly measuring the cell dimensions in order to estimate gas formation is, although practiced, subject to a relatively high uncertainty.

Various procedures exist for supplying gas from a sample into an analytical instrument. However, simple gas extraction from the sample may be impeded by a sample, which may - despite gas formation - be under negative pressure relative to a surrounding atmosphere, e.g. gas generation during battery formation, which often produce only a very low amount of at least one gas. Otherwise, at least one gas may be provided in a very large amount, e.g. a gas being evolved during thermal runaway. Basically, known extraction methods can be divided into two different approaches: firstly, direct supplying a gas stream from the sample to the analytical instrument and, secondly, indirectly supplying the stream gas from the sample to the analytical instrument via a gas container, such as a gas-tight syringe or a headspace vial.

On one hand, existing methods for gas injection into an analytical instrument using a syringe or a headspace vial may exhibit at least one of the following shortcomings:
- an over-pressure, or at least a normal pressure against atmosphere, is required to reliably fill the syringe;
- a residual amount of ambient gas usually remains in the needle;
- even when using a septum, a risk of puncturing the sample and contaminating the septum with outside atmosphere remains;
- if septa are applied to the samples, e.g. fixed with an adhesive tape or bonded with a sealant, a risk of contamination of the sample by these kinds of materials exists;
- to determine absolute quantities, it is necessary to know the total amount of gas, which requires additional error-prone measurements;
- high-precision gas-tight gas syringes require cleaning at an extensive effort;
- reliable calibration requires several calibration mixtures having different concentrations;
- gas sampling may lead to a damage of a cover for the sample, which is then no longer hermetically sealed. As a result, a further use of the sample is no longer possible under defined conditions (e.g. water content);
- to achieve a balanced pressure, an addition of extra gas is required, which may dilute the sample and may, thus, complicate its analysis;
- when using small amounts of gas, e.g. 5 µl to 100 µl, error ranges may become large, especially due to pressure fluctuations;
- headspace and solid-phase micro-extraction (SPME) approaches largely depend on the particular compound, however, the composition of samples is often not known;
- glass surfaces in headspace vials can react with cell gases, e.g. HF, PF₃, etc., and may, thus, cause undesired additional signals; and/or
- a quantification using a headspace method is time-consuming and requires a high level of understanding.

On the other hand, a direct supply of the gas stream into the analytical instrument comprises various major challenges, especially at least one of:
- very specialized equipment is needed, which involves sophisticated circuits and requires a high level of user expertise;
- specially designed cells are often not directly comparable with commercial cells;
- dilution of the sample is often necessary due to a use of large containers;
- quantitative measurements may require a use of expensive calibration gas mixtures, especially when used with GCMS due to their non-linearity;
- adaptation to other sample containers is not easily feasible, in particular due to especially designed equipment.

G. Gachot, P. Ribière, D. Mathiron, S. Grugeon, M. Armand, J.-B. Leriche, S. Pilard, and S. Laruelle, Gas ChromatographylMass Spectrometry As a Suitable Tool for the Li-Ion Battery Electrolyte Degradation Mechanisms Study, Anal. Chem. 2011, 83, pp. 478-485, describe an assembly designed for evacuating a sample chamber and, subsequently, introducing sample gas. Although not illustrated, it can be assumed that a vacuum pump can be shut off by using a valve so that an introduction of the sample, presumably via a flow regulating valve, can take place into an evacuated system. However, this system does not provide an exact knowledge of the pressure in a gas-filled loop. Further, the amount of gas cannot be controlled, except via a flow control valve; foreign gas cannot be added. Further, the vacuum is on the outlet side of the assembly, so that any impurities are always sucked through the loop and valve system. Further, quantified measurements are not possible without an internal standard gas. Further, a determination of the sample chamber volume is not possible. Finally, the arrangement does not allow gas separation of various compounds, especially CO/CO₂, H₂, He, Ar/O₂, N₂, or CH₄, which are important for Li-ion cells, due to MS detection or columns which are appropriate for polar organic compounds. Further, PLOT columns which could be used to separate the gaseous compounds are difficult to use in combination with MS due to particle contamination of the MS.

EP 3 696 902 A1 discloses a device for automatically collecting gas generated in a secondary battery, and an apparatus for automatically collecting gas generated in a plurality of secondary batteries and automatically injecting the gas into an analysis apparatus so that the gas can be analyzed, wherein the apparatus comprises: a plurality of battery holders in which a plurality of secondary batteries are capable of being mounted; a battery holder tray in which the plurality of battery holders are placed; a collecting unit which moves in the direction perpendicular to the surface of a secondary battery to be analyzed among the plurality of secondary batteries, so that the collecting unit can be coupled to or uncoupled from the surface of the secondary battery to be analyzed; and a punching unit which moves, in the collecting unit, in the direction perpendicular to the surface of the secondary battery to be analyzed, to punch the surface of the secondary battery fixed to the collecting unit, wherein the battery holder tray is capable of rotating such that the surface of the secondary battery can face the collecting unit.

US 2018/0299414 A1 discloses a gas sample injection apparatus for gas chromatography analysis, the apparatus comprising: a gas collecting tube for collecting the gas inside a cell and regulating it with an open/close valve to discharge a portion of the collected gas as a gas sample; a gas sampling loop for collecting the gas sample injected into a gas chromatography; a first switching valve for regulating an injection of the gas sample filled in the gas sampling loop into the column of the chromatography with a carrier gas; a second switching valve connected to the gas collection tube and for regulating a diffusion of the gas sample into the gas sampling loop; and a vacuum pump for vacuum-depressurizing the gas sampling loop, and a injection method using the same. Herein, two expensive 6-port 2-position valves are used for controlling the gas flow.

### Problem to be solved

It is therefore an objective of the present invention to provide an assembly and a method for supplying a gas stream from a sample to at least one analytical instrument as well as a related computer program, a system for determining at least one property of a gaseous component in the gas stream, and a use of the system, which at least partially overcome the above-mentioned problems of the state of the art.

It would be desirable to allow a reliable measurement of the gaseous component, calibrating respective gas quantities, and determining absolute amounts of the gas quantities in a sample, preferably in an automatic manner. It would be, particularly, desirable to determine and quantify the gaseous component automatically even at low pressure prevailing in the sample.

### Summary of the invention

This problem is solved by an assembly and a method for supplying a gas stream from a sample to at least one analytical instrument as well as a related computer program, a system for determining at least one property of a gaseous component in the gas stream, and a use of the system having the features of the independent claims. Preferred embodiments, which might be implemented in an isolated fashion or in any arbitrary combination, are listed in the dependent claims or throughout the following description.

The present invention is defined in the appended claims.

**In** a first aspect, an assembly for supplying a gas stream from a sample to at least one analytical instrument is disclosed. Herein, the assembly comprises:
- a vacuum control device configured for controlling access to a vacuum, having
   ∘ at least one first valve designed for adjusting the access to the vacuum;
- a gas inlet device configured for supplying the gas stream from the sample, having
   ∘ a second valve designed for adjusting the gas stream provided by the sample;
- a gas calibration device configured for providing a calibrated gas input stream to the at least one analytical instrument, having
   ∘ a third valve designed for adjusting access to at least one calibration gas, and
   ∘ a calibration gas container designed for receiving a portion of the at least one calibration gas; and
- at least one connection element for supplying the gas stream as a gas input stream or the calibrated gas input stream to the at least one analytical instrument, providing access to
   ∘ the at least one analytical instrument,
   ∘ the vacuum control device,
   ∘ the gas inlet device, and
   ∘ the gas calibration device.

As generally used, the term "assembly" refers to a combination of at least two devices, wherein the assembly according to the present invention comprises the vacuum control device, the gas inlet device, and the gas calibration device. Herein, each of the devices may be an individual component. Alternatively, two or more of the devices may be integrated into a combined device. As a further alternative, one or more of the devices may be partitioned into two or more sub-devices. In addition, one or more of the devices may comprise at least one further component, which may be mentioned in the following or not.

As used herein, the term "sample" refers to at least one element which comprises one or more components in a receptacle, wherein at least one of the components is or comprises at least one gaseous component or is capable of generating at least one gaseous component. In a particularly preferred embodiment, the sample may, preferably, be selected from a chemical energy storage system, especially from a Li-ion, a Na-ion, a Ca-ion, or a K-ion pouch-bag cell, a prismatic cell, or round cell; a lithium-sulfur battery; a fuel cell; a redox flow battery; or solid-state battery. However, a further kind of chemical energy storage system may also be feasible. In a further preferred embodiment, a further source for the least one gaseous component may be used, in particular a corrosion process, a chemical synthesis, or a catalysis reaction, may also be feasible. In general, the gaseous component can be released by the sample in order to constitute the "gas stream" which can be supplied from the sample to the at least one analytical instrument by using the assembly according to the present invention.

As further generally used, the term "analytical instrument" refers to an apparatus which is configured to determine at least one measurable property of at least one sample, wherein the analytical instrument according to the present invention is configured to determine at least one measurable property of a gaseous component supplied to the analytical instrument by using the assembly as disclosed herein. As used herein, the term "measurable property" refers to a material or chemical property of the gaseous component, in particular to a substance and/or composition of the gaseous component. Explicitly excluded from the term "measurable property" are properties of the gaseous component which are related to a pressure, a partial pressure, or a volume of the gaseous component.

As further used herein, the terms "supply", "supplying" or any grammatical variation thereof refer to a process of providing the gas stream comprising a gaseous component from the sample to the at least one analytical instrument. Preferably, the at least one analytical instrument may be selected from a gas chromatography device, a mass spectrometer, a Fourier-transform infrared (FTIR) spectrometer, a gas detector, or a Raman spectrometer. However, a further type of analytical instrument may also be feasible. The gas stream may be supplied to a single analytical instrument. As an alternative, the gas stream may be provided to at least two individual analytical instruments, especially in consecutive manner and/or in a parallel manner.

As indicated above, the assembly comprises a vacuum control device, wherein the vacuum control device is configured for providing a vacuum. As used herein, the term "vacuum" refers to a negative pressure, preferably below 1 bar absolute pressure, more preferred below 750 mbar absolute pressure, especially below 250 mbar absolute pressure, within at least a portion of a volume, wherein conduits and receptacles which are comprised by the assembly constitute the volume. As a result, less than 250 ppm, preferably less than 100 ppm, more preferred less than 50 ppm, of a gaseous component is present in the residual gas, such that no traceable portion of the gaseous component is present in the at least the portion of the volume. However, the traceable portion may depend on the at least one analytical instrument, and may be less than 1 ppm for a highly-sensitive analytical instrument, in particular a mass spectrometer or an ionization detector. The vacuum control device at least has
∘ at least one first valve designed for adjusting the access to the vacuum, and
∘ preferably, a first conduit to the vacuum, and
∘ preferably, a first outlet.

As used herein, the terms "first", "second", "third", "fourth", and further refer to different elements of the same kind which can be simultaneously present in the assembly, wherein the terms are, however, considered as a description without specifying any order and without excluding any embodiment in which still further elements of the same kind may be present.

As indicated above, the vacuum control device has at least one first valve which is designed for adjusting the access to the vacuum. As generally used, the term "valve" refers to an element which is configured to assume at least two different positions, wherein an amount of the gas stream supplied through the valve depends on the selected position. As generally used, the term "amount" of a gas stream refers to a total quantity of gas comprised by the gas stream. By way of example, the valve my assume one of two positions "ON" and "OFF", wherein the gas streams through the valve in the position "ON", while no amount of the gas streams through the valve in the position "OFF". In a further example, the valve may assume one of an arbitrary position between "ON" and "OFF", wherein a desired amount of the gas which streams through the valve can be adjusted. In general, the valve can have one or more input ports and one or more output ports, wherein the at least one input port is designed for receiving a gas stream, while the at least one output port is designed for releasing a gas stream, an amount thereof depending on the selected position of the valve.

As indicated above, the at least one first valve is designed for adjusting the access to the vacuum. As used herein, the terms "adjustment", "adjusting" or any grammatical variation thereof refer to a process of implementing a desired value for a physical quantity, such as a pressure or an amount of gas, by using an element which is especially designed for this purpose. In particular, the at least one first valve is designed for implementing a negative pressure having a desired value as defined above to be considered as a vacuum. For this purpose, the at least one first valve may, preferably, comprise an oil-free and a grease-free valve or a valve cleaned from oil or grease, in particular a needle valve, a diaphragm valve, or a magnetic valve. These types of valves are particularly advantageous since they, generally, do not introduce any impurities, such as grease or oil, into the gas stream. In a particular embodiment, the at least one first valve may comprise two individual valves, in particular, a needle valve and a diaphragm valve, wherein the diaphragm valve may be arranged between a first conduit to the vacuum as described below in more detail and the needle valve, while the needle valve may be arranged between the diaphragm valve and the first outlet as further described below. However, using a further kind of valves, such as a multi-port valve, may also be feasible.

Further, the vacuum control device may, preferably, have a first conduit to the vacuum which is designed for providing access from the at least one first valve to the vacuum in order to allow the vacuum to expand to at least a desired portion of the volume provided by conduits and receptacles comprised by the assembly. As generally used, the term "conduit" refers to a tube which is configured for enabling a transport of the gas stream in at least one direction, especially as a "one-way conduit" in a single direction, as a "bidirectional conduit" in two opposing directions. For a purpose of providing access to the vacuum, the first conduit may, preferably, provide access to at least one vacuum pump configured to operate in a manner that the desired vacuum can be provided.

As further indicated above, the vacuum control device may, preferably, have a first outlet which may be designed for providing access to the vacuum via the at least one connection element to one or more devices which are further comprised by the assembly, in particular to the gas inlet device, to the gas calibration device, to at least one analytical instrument and, optionally, via the at least one analytical instrument to a gas control device, and, further optionally, to a volume control device as described below in more detail. As used herein, the term "outlet" refers to a one-way conduit which is designed for enabling the transport of the gas stream out of the vacuum control device to at least one device further comprised by the assembly, especially depending on the selected embodiment and the performed method step.

In a preferred embodiment, the vacuum control device may, additionally, have at least one further component, which may, especially, be designed for supplying an inert carrier gas to the vacuum control device, in particular
∘ at least one further valve designed for adjusting a stream of the inert carrier gas, and,
∘ preferably, at least one further conduit to a source of an inert carrier gas, and
∘ optionally, at least one further manometer.

However, further kinds of components may also be feasible.

As generally used, the terms "inert carrier gas" or "protective gas" refer to at least one further gaseous component, which is added to the gas stream without being able to react with a gaseous component comprised by the gas stream and without being desired to be measured by the at least one analytical instrument. For this purpose, the inert carrier gas may, preferably, comprise a noble gas, particularly selected from at least one of helium (He), argon (Ar) or krypton (Kr); and/or nitrogen (N₂). However, using at least one further inert carrier gas may also be feasible. In a preferred embodiment, the inert carrier gas may be supplied by a source of at least one inert carrier gas embodied within the vacuum control device. Alternatively or in addition, the source of the at least one inert carrier gas may be an external source which may not be comprised by the vacuum control device. Depending on the embodiment of the source, the conduit to the source of the at least one inert carrier gas may be embodied within the vacuum control device or, alternatively or in addition, be a conduit providing external connection from the source of the at least one inert carrier gas to the vacuum control device.

In this particular embodiment, the vacuum control device may, further, have at least one further valve which can be designed for adjusting a stream of the inert carrier gas. For a purpose of adjusting the stream of the inert carrier gas, the at least one further valve may, preferably, comprise a needle valve, more preferred an oil-free and grease-free needle valve, a diaphragm valve, or a magnetic valve. These types of valves are particularly advantageous since they do not introduce any impurities into the stream of the inert carrier gas. In a particular embodiment, the at least one further valve may comprise two individual valves, in particular, a needle valve and a diaphragm valve, wherein the diaphragm valve may be arranged between the conduit to the source of the at least one inert carrier gas and the needle valve, while the needle valve may be arranged between the diaphragm valve and the first outlet, wherein the first outlet may, in this particular embodiment, have two input ports, a first input port designed for receiving the vacuum and a second input port designed for receiving the stream of the inert carrier gas, and at least one output port, wherein a first output port may be connected to the gas inlet device, while an optional second output port may, preferably, be connected to a further manometer located between the two needle valves and designed for monitoring a pressure upstream of the gas inlet device. However, using a further type of valve, preferably a multi-port valve, may also be feasible.

As already indicated above, the assembly further comprises a gas inlet device configured for supplying the gas stream from the sample, having
∘ a second valve designed for adjusting the gas stream provided by the sample, and
∘ preferably, a coupling element designed for providing a coupling to the sample for receiving the gas stream from the sample, and
∘ preferably, at least one second outlet for supplying the gas stream.

As indicated above, the gas inlet device has at least one a second valve which is designed for adjusting the gas stream provided by the sample. For the term "adjusting", reference can be made to the definition as provided above. In particular, the at least one second valve is designed for implementing a desired value of a pressure, thereby providing a desired amount of a gas stream as provided by the sample. Herein, the at least one second valve may, preferably, be or comprise a diaphragm valve or a magnetic valve. More particular, the at least one second valve may, preferably, be or comprise a multi-valve manifold which is designed for controlling the flow of the gas stream and a potential access of a vacuum by using two membrane valves. However, the at least one second valve can also be embodied in a further manner known to the person skilled in the art, e.g. a magnetic valve.

In a preferred embodiment, the gas inlet device may have a coupling element designed for providing a coupling to the sample for receiving the gas stream from the sample. As generally used, the term "coupling element" refers to an element which is configured to provide a fixed or, preferably, a detachable connection between two individual devices. The coupling element according to the present invention is designed for providing a detachable connection between the gas inlet device and a sample, preferably an arbitrary sample, which is capable of providing the desired gas stream to be analyzed by to the at least one analytical instrument and which comprises a fixed volume inside which may be unknown. For further details concerning the sample and the analytical instrument, reference can be made to the definitions above.

Preferably, the coupling element may a quick coupling element, wherein a first portion of the quick coupling may, preferably permanently, be placed on a respective location on the gas inlet device, and wherein a further portion can be variably connected to at least one, preferably a plurality of, external adaptation elements. For this purpose, the coupling element may have a reception, wherein the reception may, especially, be designed for being connected to a fitting counterpart attached to the sample. As generally used, the term "reception" refers to an element of a device which is configured for receive a further element denoted by the term "counterpart" to be attached to the device by using the reception. Preferably, the reception according to the present invention may be designed and arranged to be capable of receiving a fitting counterpart attached, either fixedly or detachably, to the sample, wherein the term "fitting" refers to a property of the counterparts which facilitates the coupling between of the counterpart to the reception. This embodiment particular facilitates attaching and removing a sample as well as exchanging of samples. In this preferred embodiment, the coupling element may, in particular, comprise a septum which may be inserted into an attachment.

Further, the gas inlet device may, preferably, have a at least one second outlet which is designed for supplying the gas stream as a gas input stream via at least one connection element as described below in more detail to the at least one analytical instrument, in particular, for performing at least one measurement in the at least one analytical instrument in order to determine at least one property of a gaseous component in the gas stream. As used herein, the term "gas input stream" refers to the gas stream when supplied to the selected analytical instrument or, in a consecutive and/or a parallel manner, to at least two selected analytical instruments. Similarly, the term "gas output stream" refers to the gas stream when received from the selected analytical instrument or, in a consecutive and/or a parallel manner, from the at least two selected analytical instruments.

As indicated above, the assembly further comprises a gas calibration device, which is configured for providing a calibrated gas input stream to the at least one analytical instrument. For this purpose, the gas calibration device has:
∘ a third valve designed for adjusting access to at least one calibration gas,
∘ a calibration gas container designed for receiving a portion of the at least one calibration gas, and
∘ preferably, a first manometer designed for recording a first pressure in the calibration gas container and/or for controlling the third valve configured to adjust a pressure in the calibration gas container,
∘ preferably, a fourth valve designed for adjusting the calibrated gas input stream, and
∘ preferably, at least one third outlet for supplying the calibrated gas input stream.

As generally used, the terms "calibration" or "calibrating" or any grammatical variation thereof refer to determining at least one precisely defined quantity of at least one known substance. With particular regard to the present invention, the at least one known substance is or comprises at least one known gaseous component. As further generally used, the term "calibration gas" refers to at least one known gaseous component being used for a purpose of calibration. While a gas input stream which is provided to the at least one analytical instrument, generally, has an unknown composition in an unknown amount to be determined by the at least one analytical instrument by performing at least one measurement, a calibrated gas input stream has a known composition in a known amount, which is provided to the at least one analytical instrument, in particular, for performing at least one calibration measurement. In this manner, an appropriate determination of at least one property of a gaseous component in the gas stream by the at least one analytical instrument can be ensured by recording a response of the at least one analytical instrument to the at least one known composition as provided in the known amount. For this purpose, the calibration gas may, preferably, comprise at least one component being identical, similar or related to at least one component to be measured in at least one calibration measurement by the at least one analytical instrument in at least one amount which a person skilled in the art expects that the at least one analytical instrument may receive of the at least one identical, similar or related component for a purpose of at least one measurement. However, using at least one further calibration gas may also be feasible.

Accordingly, the gas calibration device has a third valve, which is designed for adjusting the access to at least one calibration gas. In a preferred embodiment, the calibration gas may be supplied by an external source which may not be comprised by the gas calibration device. Alternatively or in addition, the source of the calibration gas may be embodied within the gas calibration device. Depending on the embodiment of the source, a second conduit to the source of the calibration gas may be or comprise a tube providing external connection from the source of the calibration gas to the gas calibration device or, alternatively or in addition, be embodied within the gas calibration device.

Further, the gas calibration device has a calibration gas container designed for receiving a portion of the at least one calibration gas. As generally used, the term "gas container" refers to a receptacle of an arbitrary form but having a known volume designed for receiving a portion of at least one gas. Preferably, the volume may be a fixed known volume that cannot be altered. For this purpose, a sample loop, or a container having walls comprising an inert material, in particular stainless steel, may preferably be used. As an alternative, the volume may be variable, wherein, however, a value of the volume may be known and/or can be determined at any desired point of time, in particular, at a point of time when the volume has received the desired portion of the at least one gas. With particular regard to the present invention, the volume of the calibration gas container is designed to receive a desired portion of the at least one calibration gas.

Further, the gas calibration device may, preferably, have a first manometer designed for recording a first pressure in the calibration gas container, thereby determining whether the calibration gas container has received the desired portion of the at least one calibration gas or not. Alternatively or in addition, the first manometer can further be designed for controlling the third valve configured to adjust the desired pressure in the calibration gas container. As generally used, the term "manometer" refers to an arbitrary element that is configured to determine at least one value of a pressure within a volume. In a preferred embodiment, the first manometer may be an electronic manometer, especially in order to be capable of automatically and precisely determining the first pressure within the volume comprised by the calibration gas container. However, further embodiments of the first manometer are feasible.

At least one value of the first pressure in the calibration gas container may be recorded after an amount of calibration gas has been received by the calibration gas container, in particular by introducing a defined portion of the calibration gas via the third valve from the source of the calibration gas. As generally used, the term "recording" or any grammatical variation thereof refers to taking at least one measurement value as at least one piece of desired information, while the term "monitoring" or any grammatical variation thereof refers to a process of continuously deriving pieces of desired information, preferably without user interaction. As further used herein, the terms "determination", "determining" or any grammatical variation thereof relate to a process of generating at least one representative result, in particular a value for a volume occupied by a gas stream. In a particularly preferred embodiment, the first manometer may be used for recording a first pressure in the calibration gas container. In an alternative embodiment, the at least one value of the first pressure in the calibration gas container may be known from the amount of the calibration gas as received by the calibration gas container. Irrespective of the determination of the at least one value of the first pressure in the calibration gas container, the calibrated gas input stream having a known composition in a known amount can be provided and supplied to the at least one analytical instrument, in particular, for performing at least one calibration measurement.

Further, the gas calibration device may, preferably, have a fourth valve, which is designed for adjusting the calibrated gas input stream to be supplied via the at least one connection element as described below in more detail to the at least one analytical instrument, in particular, for performing at least one calibration measurement in the at least one analytical instrument in order to determine at least one property of a gaseous component in the calibrated gas input stream. For a purpose of providing a route between the fourth valve and the at least one connection element, the gas calibration device may, preferably, have a third outlet which is designed for supplying the calibrated gas input stream via the at least one connection element as described below in more detail to the at least one analytical instrument. **In** an alternative embodiment, the at least one connection element may be or comprise a multi-port valve that may be configured for adjusting the calibrated gas input stream to be supplied via the at least one connection element.

**In** a particularly preferred embodiment, the gas calibration device may be embodied as a device being separate from any other device of the assembly, in particular from the gas inlet device. **In** this manner, providing the calibrated gas input stream to the analytical instrument can be performed independently from providing the gas input stream to the analytical instrument. **In** an alternative embodiment, the gas calibration device can be comprised by the gas inlet device and, if present, a volume control device as described elsewhere herein. **In** an alternative embodiment, the gas calibration device may be identical with the gas inlet device, further being configured for supplying the gas stream from the sample to the connection element to be provided to the analytical instrument. **In** this alternative embodiment, the third valve may be identical with the second valve, further being designed for adjusting the gas stream provided by the sample. **In** this alternative embodiment, the first manometer may further be designed for recording the first pressure in the calibration gas container, thereby determining a pressure of the gas stream from the sample. Alternatively or in addition, the first manometer may further be designed for controlling the second valve, which assumes here the function of the second valve, thereby adjusting the gas stream provided by the sample. As advantage of this alternative embodiment, the assembly can be provided in a more compact manner. For further details, reference can be made to the description below.

As indicated above, the assembly further comprises at least one connection element, which is configured for supplying the gas stream as a gas input stream or the calibrated gas input stream to the at least one analytical instrument, providing access to
∘ the at least one analytical instrument;
∘ the vacuum control device,
∘ the gas inlet device, and
∘ the gas calibration device.

As generally used, the term "connection element" refers to an arbitrary element configured to provide a connection between at least two parts. As further generally used, the term "connection" refers to a route between at least two parts provided by the connection element. In accordance with the present invention, the connection element provides a route which enables a transport of a gas stream, in particular of the gas input stream from the gas inlet device or of the calibrated gas input stream from the gas calibration device to the at least one analytical instrument, or from at least one of the analytical instrument, the gas inlet device or the gas calibration device to the vacuum control device.

In general, the one or more connection elements may be designed and arranged with respect to each other in an arbitrary manner as long as it grants the access to the above-mentioned components. For this purpose, a plurality of connection elements may be used. However, in a particularly preferred embodiment, the at least one connection element may be a common connection element configured to provide direct access to
∘ the at least one analytical instrument;
∘ the vacuum control device,
∘ the gas inlet device, and
∘ the gas calibration device.

As generally used, the term "direct access" refers to a manner of providing access without using an intermediate element, apart from respective conduits as defined above. In this particularly preferred embodiment, the common connection element may have at least four ports, each of which is designated for providing direct access to one of the above-mentioned components. In a particular embodiment, the common connection element may comprise a switch that may be configured for providing alternate direct access to the gas inlet device and to the gas calibration device. Herein, the switch may, preferably, be designed for switching between the at least one second outlet comprised by the gas inlet device and the at least one third outlet for supplying the calibrated gas input stream. However, further embodiments are feasible.

In a preferred embodiment, the gas output stream from the at least one analytical instrument can be released by using at least one plug which is comprised by or attached to the at least one analytical instrument. Alternatively or in addition, a gas balance stream may be received in this manner. Herein, the plug may be mechanically movable in a manual fashion or, preferably, by using a controllable device which is designed for this purpose. For the term "gas output stream", reference can be made to the definition as provided above.

In an alternative embodiment, the assembly may, further, comprise a gas control device which is configured for receiving the gas output stream from the at least one analytical instrument. In accordance with the present invention, the gas control device has
∘ at least one fifth valve designed for adjusting a second pressure of the gas output stream, and,
∘ alternatively or in addition, a closure designed for hermetically sealing at least one output of the at least one analytical instrument;
∘ preferably, an inlet for receiving the gas output stream from the at least one analytical instrument;
∘ preferably, a second manometer designed for monitoring the second pressure in the gas output stream;
∘ preferably, at least one sixth valve designed for adjusting access to at least one protective gas; and
∘ preferably, at least one third conduit designed for at least one of releasing the gas output stream or receiving a gas balance stream.

The at least one fifth valve may, preferably, comprise a needle valve, more preferred an oil-free and grease-free needle valve, a diaphragm valve, or a magnetic valve. These types of valves are particularly advantageous since they do not introduce any impurities into the stream of the inert carrier gas. In a particular embodiment, the at least one fifth valve may comprise two individual valves, in particular, a diaphragm valve and a needle valve, wherein the needle valve may be arranged between the outlet of the least one selected analytical instrument, while the diaphragm needle may be arranged between the needle valve and the at least one third conduit of the gas control device. However, using a further type of valve, preferably a multi-port valve, may also be feasible.

Alternatively or in addition to the at least one fifth valve, the gas control device may have a closure that may be designed for hermetically sealing at least one output of the at least one analytical instrument, especially from an atmosphere surrounding the at least one analytical instrument. In this manner, no gas can be provided by an external atmosphere to the at least one analytical instrument to influence a measurement in an undesired manner.

As indicated above, the gas control device may, preferably, have an inlet which is designed for receiving the gas output stream from the at least one analytical instrument. As used herein, the term "inlet" refers to a one-way conduit which is designed for enabling the transport of the gas output stream out of the at least one analytical instrument to the gas control device as further comprised by the assembly. However, using a bidirectional conduit may also be feasible, especially in the embodiment in which the gas control device is configured to receive a gas balance stream. For this purpose, the inlet may have a single input port for receiving the gas output stream from a single analytical instrument or at least two analytical instruments in a line, and a first output port connected to the at least one fifth valve. In a particular embodiment, the inlet may have at least two input ports for receiving the individual gas output streams which may be individually provided by the at least two analytical instruments.

In a particular embodiment, the inlet may have two output ports, the first output port connected to the at least one fifth valve, while a second output port may, preferably, be connected to a second manometer which is designed for monitoring a second pressure in the gas output stream. For the terms "monitoring" and "recording", reference can be made to the definitions as provided above. Preferably, at least one value of the second pressure in the gas output stream may be recorded after the assembly has been evacuated, either before or after at least one measurement has been performed by using the at least one analytical instrument. In this manner, the volume of the gas output stream can be determined by using the at least one value of the second pressure in the gas output stream, while the coupling to the sample is provided until recording the at least one value of the second pressure in the gas output stream may be completed. In a preferred embodiment, the second manometer may be an electronic manometer, especially in order to be capable of precisely monitoring the prevailing pressure during injection of the gas input stream into the at least one analytical instrument and/or during release of the gas output stream from the at least one analytical instrument. However, further embodiments are feasible.

The at least one third conduit is designed for releasing the gas output stream from the gas control device and/or for receiving a gas balance stream by the gas control device. In this manner, the gas output stream can be released from the assembly, such as into an atmosphere adjoining the at least one third conduit and/or into a further receptacle that may be attached to the at least one second conduit. The conduits and receptacles comprised by the assembly can be emptied from gas streams in this manner, and can, still further, be flushed by the inert carrier gas that may be supplied by using the vacuum control device as described elsewhere herein in more detail. Alternatively or in addition, a gas balance stream can be received by the at least one third conduit in order to adjust a desired value for the second pressure within the gas control device and, preferably, the whole assembly, in particular, after the at least one measurement in the at least one analytical instrument may have been performed.

For adjusting the second pressure within the gas control device, at least one sixth valve designed for adjusting access to the at least one gas balance stream may, further, be used. For monitoring the second pressure within the gas control device, the second manometer as, preferably, comprised by the gas control device, may be used. The gas balance stream may be supplied to the at least one third conduit, in particular from the atmosphere adjoining the at least one third conduit and/or, preferably, from a further receptacle attached to the at least one third conduit, wherein the further receptacle may comprise at least one inert carrier gas, in particular at least one inert carrier gas as described above in connection with the vacuum control device. In a particular embodiment, the same external source may be used for supplying the at least one inert carrier gas to both the vacuum control device and to the gas control device. However, further embodiments are feasible.

In a particular embodiment, the assembly may further comprise
- a volume control device configured for determining a volume of the gas stream, having
   ∘ at least one sample loop designed for receiving a known volume of the gas stream;
   ∘ preferably, at least one seventh valve connected to a fourth conduit to the vacuum, to the at least one second outlet comprised by the gas inlet device, and to the at least one sample loop; and,
   ∘ preferably, a third manometer designed for monitoring a third pressure in the volume control device.

Herein, the volume control device may be configured for determining the volume, in particular the total volume, of the gas stream and, when a non-compressible sample is used, also the internal pressure in the sample. In addition to a property of a gaseous component, also the volume of the gaseous component in the gas stream can be determined by employing the volume control device according to the present invention. For this purpose, the volume control device has at least one sample loop which is designed for receiving a known volume of the gas stream. For further details, reference can be made to the description below.

Further, the volume control device comprises at least one seventh valve connected to
∘ a fourth conduit to the vacuum,
∘ to the at least one second outlet comprised by the gas inlet device, and
∘ to the at least one sample loop.

For this purpose, the seventh valve may, preferably, have at least six ports and at least two positions. However, further kinds of valves may also be feasible. For further details concerning the seventh valve, reference can be made to the description above with respect to the other valves and to the description below which illustrated a preferred embodiment of the seventh valve.

As indicated above, the at least one second outlet which is comprised by the gas inlet device is designed for supplying the gas stream as a gas input stream to the at least one analytical instrument. For a purpose of providing a connection not only to the at least one analytical instrument but, additionally, also to the at least one seventh valve, the connection element, preferably the common connection element, may be used. Alternatively or in addition, a switch may be used, which may be configured to supply the gas stream to the at least one analytical instrument and/or to the at least one seventh valve.

**In** this particularly preferred embodiment, the volume control device may, preferably, comprise a third manometer, preferably an electronic manometer, which is designed for monitoring a third pressure that is prevailing in the volume control device. For further details using the third pressure for determining the volume of the gas stream, reference can be made to the description below.

**In** a preferred configuration, the calibration gas container can be used as volume control device. **In** dependence of the gas amount, the pressure difference can be determined with the manometer from the calibration gar container in the same manner as described here for the volume control device. This can be done more preferred when the gas is almost free of contamination in order to ensure not to contaminate the calibration gas container and/or any valves.

In a further aspect, a system for determining at least one property of a gaseous component in a gas stream is disclosed. Accordingly, the system comprises
- the assembly for supplying the gas stream from the sample to the at least one analytical instrument according as described elsewhere herein; and
- the at least one analytical instrument.

For further details concerning the system, reference can be made to the description above and/or below with regard to the assembly and the at least one analytical instrument.

In a further aspect, a method for supplying a gas stream from a sample to at least one analytical instrument, in particular by using an assembly for supplying the gas stream from the sample to the at least one analytical instrument as described elsewhere herein, is disclosed. The method comprises the following steps a) to c):
a) evacuating the assembly by providing access to a vacuum by using the vacuum control device; and terminating the access to the vacuum (124);
b) supplying a calibrated gas input stream at least once to the at least one analytical instrument; and providing time for performing at least one calibration measurement in the at least one analytical instrument for determining at least one property of at least one gaseous component in the calibrated gas input stream; and
c) supplying the gas stream from the sample to the gas inlet device; and providing time for performing at least one measurement in the at least one analytical instrument for determining at least one property of a gaseous component in the gas stream by considering the at least one property of the at least one gaseous component in the calibrated gas input stream.

In a preferred embodiment, the method may be performed in form of repeated calibration and measuring cycles. Herein, a first calibration cycle may start with step a) and continue with step b), in which manner consecutive calibration gas streams can, subsequently, be measured. In this embodiment, the assembly is evacuated according to step a) after each calibration measurement according to step b), whereby a new calibration cycle may be started, in particular to ensure that no traces of the previously measured gaseous components in the calibration gas may remain in in the assembly. As an alternative, repeating step a) can, particularly, be omitted during a calibration cycle in an embodiment in which an increasing amount of a particular gaseous component may be comprised by the calibrated gas input stream. Hereinafter, a first measuring cycle starts with step a) and continues with step c), in which manner consecutive gas streams originating from a single sample and/or a number of gas streams from different samples can, subsequently be measured. In this embodiment, the assembly can be evacuated according to step a) after each measurement according to step c), whereby a new measuring cycle can be started, in particular to ensure that no traces of the previously measured gaseous components may remain in in the assembly. However, various further embodiments are feasible.

In this preferred embodiment, the method may comprise a further step of
e) flushing the assembly by providing inert carrier gas by using the vacuum control device,
also denoted as "flushing step". In this manner, the conduits and receptacles which are comprised by the assembly can be emptied from the gas stream by using the inert carrier gas that may be supplied by using the vacuum control device as described elsewhere herein in more detail. In the same manner, the calibration gas container can also be flushed in order to dilute traces of remaining calibration gas and/or to better remove remaining traces of calibration gas. For this purpose, at least one of the inert carrier gas from the gas inlet or a separate gas can be used.

In a so-denoted "evacuating step" according to step a), the assembly, in particular the conduits and receptacles comprised by the assembly, is evacuated by providing access to a vacuum by using the vacuum control device.

After terminating the access to the vacuum, a calibrated gas input stream is supplied from the gas calibration device at least once to the at least one analytical instrument in a so-denoted "calibrating step" according to step b). In a particularly preferred embodiment, supplying the calibrated gas input stream to the at least one analytical instrument according to step b) may comprise:
(I) introducing an amount of the at least one calibration gas into the calibration gas container having a defined volume, and recording a first pressure the at least one calibration gas in the calibration gas container by using a first manometer until a defined amount of the at least one calibration gas is comprised by the calibration gas container; and
(II) providing the defined amount of the at least one calibration gas as the calibrated gas input stream to the at least one analytical instrument.

In particular, the supplying of the calibrated gas input stream to the at least one analytical instrument and the providing of time for performing at least one calibration measurement in the at least one analytical instrument according to step b) may be repeated at least once, preferably twice, thrice, four time, five time, six times, or more. Herein, the calibrated gas input stream gas can, preferably for each time, have a different pressure in order to achieve a calibration with different amounts of substance. Alternatively or in addition, the calibrated gas input stream can have the same pressure, preferably at at least two repetitions, in order to achieve a multipoint calibration that may exhibit a higher accuracy compared to a single point calibration.

After terminating the access to the vacuum and/or after performing the calibrating step, the gas stream is supplied from the sample to the gas inlet device in a so-denoted "measuring step" according to step c), wherein time is provided for performing at least one measurement in the at least one analytical instrument for determining at least one property of a gaseous component in the gas stream. As indicated above, the at least one property does, however, not include a pressure, a partial pressure, or a volume of the gaseous component.

In a particular embodiment, the method according to the present invention may comprise a further step of
d) determining a volume of the gas stream by using at least one of
∘ a defined amount of at least one inert gas;
∘ the calibration gas container; or
∘ the volume control device.

Herein, further step d) may be performed after step b), preferably during step c) and/or after step c). As described above and below in more detail, the volume control device which may, preferably, be comprised by the assembly is especially configured for this purpose. In a preferred embodiment, the calibration gas container can, preferably, be used, in particular due to its fixed volume and the option to record the first pressure with high accuracy.

In a first embodiment, the assembly can be used in an easy and reliable manner to determine gas volumes that are known, i.e. when a syringe is completely emptied after gas injection, or when a known amount of gas is introduced into the system. If these requirements cannot be achieved, e.g. when connecting a pouch-bag cell having an unknown gas volume, taking a part of a sample gas, or when a gas mouse having an unknown gas volume is used, further embodiments of the present invention can be used for determining an absolute gas amount of a gaseous species being present in the sample gas. Herein, the volume of the syringe may be used for determining the volume of the conduits and receptacles comprised by the assembly, in particular in an embodiment in which the syringe is known to have a defined volume under a defined pressure.

In a further embodiment, the assembly can be used for determining an absolute amount of a gaseous component in the gas stream by applying the following sub-steps:
(i) an introducing step, which comprises introducing a defined amount of at least one inert gas into the sample, thereby generating a gas mixture comprising the defined amount of the at least one inert gas and the gaseous component in the sample to be determined;
(ii) a modified supplying step, wherein the sample is attached to the gas inlet device, thereby supplying the gas mixture into the assembly;
(iii) a modified measuring step, whereby the defined amount of the at least one inert gas within the gas mixture is measured by using the at least one analytical instrument; and
(iv) an analyzing step, which comprises determining an absolute amount of the gaseous component in the gas stream by performing at least one measurement using precisely defined quantities of both the at least one inert gas and of the gaseous component from the sample, thereby, particularly, determining a dilution of the gaseous component from the sample by using the defined amount of the at least one inert gas.

In this manner, quantitative amounts of the gaseous component in the sample can be determined by using the assembly without the volume control device.

In a further embodiment, determining the quantitative amounts of the gaseous component in the sample can, alternatively or in addition, be determined by using the calibration gas container and/or the volume control device as described elsewhere herein.

In particular, two or more independent methods for determining the quantitative amounts of the gaseous component in the sample may be combined, especially in order to provide a second independent determination of the gas volume and/or to reduce an error of the determining step.

In a further aspect, a computer program is disclosed. The computer program comprises instructions which, when the program is executed on a computer cause an assembly control device as described elsewhere herein to perform the method for supplying the gas stream from the sample to the at least one analytical instrument as described elsewhere herein by using the assembly for supplying the gas stream from the sample to the at least one analytical instrument according to the present invention.

In a still further aspect, a non-transient computer-readable medium is disclosed. The non-transient computer-readable medium comprises instructions which, when executed by one or more processors, cause the one or more processors to perform the method for supplying the gas stream from the sample to the at least one analytical instrument as described elsewhere herein by using the assembly for supplying the gas stream from the sample to the at least one analytical instrument according to the present invention.

For further details concerning the method, the computer program and the non-transient computer-readable medium reference can be made to the description of the assembly.

With respect to the prior art, the assembly and the method for supplying a gas stream from a sample to at least one analytical instrument as well as a related computer program, the system for determining at least one property of a gaseous component in the gas stream, and the use of the system exhibit the following advantages. In particular, they allow a reliable measurement of the gaseous component, calibrating respective gas quantities, and determining absolute amounts of the gas quantities in a sample, especially in a pouch-bag cell, a prismatic cell, or a round cell, even at low pressure prevailing in the sample. Further, the assembly according to the present invention can, be used under reduced pressure (i.e. for small sample volumes which are injected into the evacuated assembly) as well as under normal pressure (i.e. for large sample volume) or, analogous to prior art procedures, by flushing the sampling gas through the assembly, or by using an over-pressure.

More particular, the following benefits are achieved hereby:
- by eliminating a need for using a syringe for enabling a gas transfer, a direct connection between the sample, in particular the pouch bag cell, and the gas inlet device is achieved without possible contamination from an adjoining atmosphere;
- no need remains for diluting the gas inside the sample, in particular pouch-bag cell, owing to direct adaption, thus resulting in a higher sensitivity of the measurements;
- an amount of gas volume as required for the measurements is significantly reduced, in particular, since no need to purge gas from the assembly remains;
- no tape on a surface of the sample, in particular the pouch bag cell, is needed.

In a particular embodiment, during which a very low concentration of at lest one gas may be measured and/or at least one high sensitive detectors may be used, the arrangement of the valves may be placed into a separate container to be flushed with inert gas, in particular with a noble gas, particularly selected from at least one of helium (He), argon (Ar) or krypton (Kr); and/or nitrogen (N₂). This particular embodiment may ensure that the sample may not be contaminated by the surrounding. As a further advantage, this embodiment may also allow an adjustment of a temperature to ensure a defined temperature in the arrangement of the valves.

As used herein, the terms "have", "comprise" or "include" or any grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, notwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features, as long as the subject-matter of said invention falls within the scope defined by the appended claims. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

### Short description of the Figures

Further optional features and embodiments of the present invention are disclosed in more detail in the subsequent description of preferred embodiments, preferably in conjunction with the dependent claims. Therein, the respective optional features may be implemented in an isolated fashion as well as in any arbitrary feasible combination, as the skilled person will realize. It is emphasized here that the scope of the invention is not restricted by the preferred embodiments. In the Figures:
- Figures 1-5: schematically illustrate preferred embodiments of a system for determining at least one property of a gaseous component in a gas stream, comprising an assembly for supplying the gas stream from a sample to at least one analytical instrument in accordance with the present invention;
- Figure 6: schematically illustrates a preferred embodiment of a method for supplying the gas stream from the sample to the at least one analytical instrument by using the assembly according to the present invention;
- Figure 7: illustrates experimental results demonstrating a correlation of a peak area to an injected volume of calibration gas mixtures using prior art (Figure 7a) and according to the present invention (Figure 7b); and
- Figure 8: illustrates a gas volume dependent pressure obtained by using the assembly according to the present invention.

### Detailed description of the embodiments

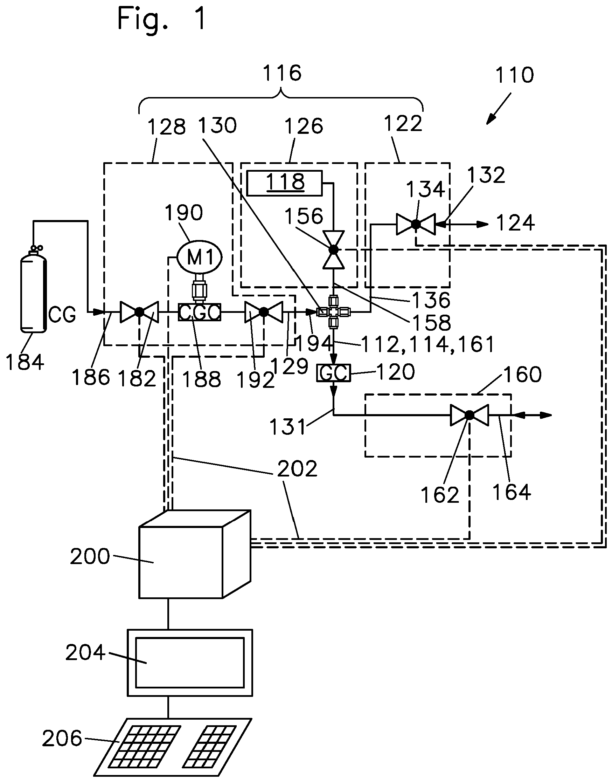

Figure 1 schematically illustrates a preferred embodiment of a system 110 for determining at least one property of a gaseous component 112 in a gas stream 114, wherein the system 110 comprises an assembly 116 for supplying the gas stream 114 from a sample 118 to an analytical instrument 120 according to the present invention. As shown in Figure 1, a gas chromatography device GC may be used for this purpose. Alternatively or in addition, a mass spectrometer, a Fourier-transform infrared (FTIR) spectrometer, a gas detector, or a Raman spectrometer may, further, be used as the analytical instrument 120. As further shown in Figure 1, the gas stream 114 is supplied to the gas chromatography device GC, 120 however, it may be provided (not depicted here) to more than one analytical instrument, especially in consecutive manner and/or in a parallel manner.

In accordance with the present invention, the assembly 116 comprises a vacuum control device 122 configured for controlling access to a vacuum 124, a gas inlet device 126 configured for supplying the gas stream 114 from the sample 118 to the analytical instrument 120, a gas calibration device 128 configured for providing a calibrated gas input stream 129 to the analytical instrument 120, and a connection element 130 for supplying the gas stream 114 as a gas input stream 161 or the calibrated gas input stream 129 to the analytical instrument 120.

As further illustrated in Figure 1, the vacuum control device 122 has an optional first conduit 132 to the vacuum 124, which can, preferably, be provided by a vacuum pump, a first valve 134, which is designed for adjusting the vacuum 124, and an optional first outlet 136, which is designed for providing the access to the vacuum 124 via the connection element 130 to one or more devices further comprised by the assembly 116. Preferably, the first valve 134 as depicted here may comprise a diaphragm valve, an oil-free and grease-free needle valve, or magnetic valve. However, using a further type of valve may also be feasible.

Further, the gas inlet device 126 as shown in Figure 1 comprises a second valve 156, which is designed for adjusting the gas stream 114 provided by the sample 118, and an optional second outlet 158 designed for supplying the gas stream 114 as the gas input stream 161 to the analytical instrument 120. The second valve 156 may, preferably, be or comprise a diaphragm valve or a magnetic valve; however, further embodiments may also be feasible.

As further illustrated in Figure 1, the gas calibration device 128 has a third valve 182 designed for adjusting access to at least one calibration gas CG. As depicted there, the calibration gas may be supplied by an external source 184 of the calibration gas CG, which may not be comprised by the gas calibration device 128. For this purpose, the gas calibration device 128 may comprise an optional second conduit 186 to the source 184 of the calibration CG gas. In a further embodiment (not depicted here), the source 184 of the calibration gas may be embodied within the gas calibration device 128.

Further, the gas calibration device 128 has a calibration gas container CGC 188 designed for receiving a portion of the at least one calibration gas CG. As schematically depicted here, the volume of the calibration gas container CGC 188 may be a fixed known volume that cannot be altered. As an alternative (not depicted here), the volume of the calibration gas container 188 may be variable, wherein, however, a value of the volume may be known and/or can be determined at any desired point of time, in particular, at a point of time when the volume has received the desired portion of the at least one calibration gas.

Further, the gas calibration device 128 has a first manometer 190, which is designed for recording a first pressure in the calibration gas container 188. In this manner, it can be determined whether the calibration gas container 188 has received the desired portion of the at least one calibration gas or not. At least one value of the first pressure in the calibration gas container 188 may be recorded after an amount of calibration gas has been received by the calibration gas container 188, in particular by introducing a portion of the calibration gas via the third valve 182 from the source 184 of the calibration gas. Alternatively or in addition, the first manometer 190 can further be designed for controlling the third valve 182 to adjust the desired pressure in the calibration gas container 188. As a result thereof, the calibrated gas input stream 129 has a known composition in a known amount which can be provided and supplied to the analytical instrument 120. Preferably, the first manometer 190 may be an electronic manometer, especially to be capable of automatically and precisely determining the first pressure within the volume comprised by the calibration gas container 188. However, further embodiments of the first manometer 190 are feasible.

Further, the gas calibration device has a fourth valve 192, which is designed for adjusting the calibrated gas input stream 129 to be supplied via the connection element 130 to the analytical instrument 120, in particular, for performing at least one calibration measurement in the analytical instrument 120 to determine at least one property of a gaseous component in the calibrated gas input stream 129. For a purpose of providing a route between the fourth valve 192 and the connection element 130, the gas calibration device 128 may, preferably, have a third outlet 194 which is designed for supplying the calibrated gas input stream 129 via the connection element 130 to the analytical instrument 120. In a particular embodiment (not depicted here), the connection element 130 may comprise a switch designed for switching between the second outlet 158 comprised by the gas inlet device 126 and the third outlet 194 for supplying the calibrated gas input stream 129. In this manner, only one of the gas stream 114 or the calibrated gas input stream 129 can be supplied at the same time interval as the gas input stream 161 to the analytical instrument 120.

In a further embodiment (not depicted here), the gas calibration device 128 may further be configured for supplying the gas stream 114 from the sample 118 via the connection element 130 to the analytical instrument 120. In this further embodiment, the gas calibration device 128 may, therefore, be identical with the gas inlet device 126. As a consequence thereof, the third valve 182 may further be designed for adjusting the gas stream 114 provided by the sample 118, thereby being identical with the second valve 156. As a further consequence thereof, the first manometer 190 may further be designed for recording the first pressure in the calibration gas container 188, thereby determining a pressure of the gas stream 114 as provided by the sample 118. Alternatively or in addition, the first manometer 190 may further be designed for controlling the second valve 156, which here assumes the function of the third valve 182, thereby adjusting the gas stream 114 provided by the sample 118. In this fashion, the assembly 110 can be provided in a more compact manner.

As further illustrated in Figure 1, the assembly may comprise an optional gas control device 160, which is configured for receiving a gas output stream 131 from the analytical instrument 120. As depicted there, the gas control device 160 has a fifth valve 162 which is designed for adjusting a second pressure of the gas output stream 131. Preferably, the fifth valve 162 may comprise a diaphragm valve or an oil-free and a grease-free needle valve, in particular a magnetic valve. However, using a further type of valve may also be feasible. Alternatively or in addition to the fifth valve 162, the gas control device 160 may have a closure (not depicted here), which may be designed for hermetically sealing at least one output of the analytical instrument 120, in particular from an atmosphere surrounding the at least one analytical instrument 120, especially for avoiding that undesired gas can be provided by an external atmosphere to the analytical instrument 120 to influence a measurement.

Further according to Figure 1, the gas control device 160 has a third conduit 164 which is designed for a gas exchange, preferably for releasing the gas output stream 131 to an adjoining atmosphere and/or into a further receptacle (not depicted here) attached to the third conduit 164. In this manner, conduits and receptacles comprised by the assembly 116 can be emptied from the gas stream 114 and, if desired, be flushed by an inert carrier gas as described below. Alternatively or in addition, a gas balance stream can be received via the third conduit 164 to adjust a desired value for the second pressure within the gas control device 160 and, preferably, the whole assembly 116, particularly after a measurement in the analytical instrument 120 may have been performed. The gas balance stream can be supplied by the third conduit 164, particularly from the adjoining atmosphere and/or, preferably, from a further receptacle attached to the third conduit 164. Herein, the further receptacle may comprise at least one inert carrier gas, in particular as described below in connection with the vacuum control device.

As further shown in Figure 1, the system 110, in particular the assembly 116, may further comprise an assembly control device 200, which is configured for controlling gas streams in the assembly 116. As schematically illustrated there, the assembly control device 200 is configured to switch at least the at least one first valve 134, the second valve 156, the third valve 182, and, if present, the fourth valve 192, and to drive and read out the first manometer 190. For this purpose, wireless or wire-bound connections 202 may be used.

Figure 1 shows that the system 110, in particular the assembly 116, may further comprise a monitor 204 and a keyboard 206. Herein, the monitor 202 may be configured to display any value related to the present invention, in particular at least one property of at least one gaseous component in the gas stream 114, while the keyboard 204 may be configured to receive commands for the assembly control device 200 from a user of the assembly 116 or the system 110. Alternatively or in addition, at least one of the assembly control device 200, the monitor 202 or the keyboard 204 may be comprised by a mobile communication device, in particular a smartphone, a tablet, or a laptop. However, further embodiments are feasible.

In an alternative embodiment (not depicted here), the analytical instrument 120 may further be configured to control the assembly control device 200. In this embodiment, the analytical instrument 120 or an analytical assembly control device (not depicted here) may comprise the assembly control device 200, the monitor 202 and the keyboard 204.

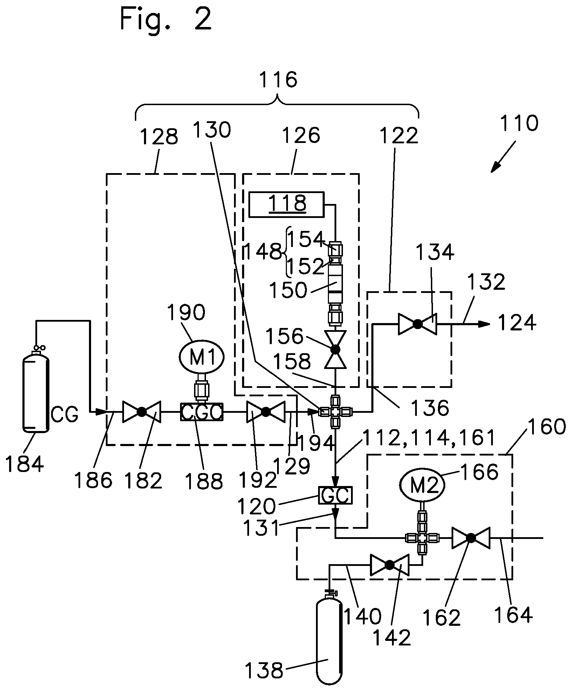

In addition, the assembly control device 200 may be configured to control additional components, which may be comprised by the system 110, in particular the assembly 116, preferably for at least one of: switching the at least one fifth valve 162, 162' and/or the seventh valve 172, and/or driving and reading the second manometer 166 and/or the third manometer 180 according to any one of the embodiments as presented in Figures 2 to 5. In a similar manner, the assembly control device 200, the monitor 202 and the keyboard 204 or, alternatively or in addition, the mobile communication device, the analytical instrument 120 and/ or the analytical assembly control device may be used, although not depicted there, in any one of the embodiments as presented in Figures 2 to 5.

Figure 2 schematically illustrates a further preferred embodiment of the system 110 for determining at least one property of the gaseous component 112 in the gas stream 114 comprising the assembly 116 for supplying the gas stream 114 from the sample 118 to the analytical instrument 120 according to the present invention. In addition to the preferred embodiment of Figure 1, the gas inlet device 126 in the assembly 116 as shown in Figure 2 further has a coupling element 148 designed for providing a coupling to the sample 118 for receiving the gas stream 114 from the sample 118. In the preferred embodiment as depicted in Figure 2, the coupling element 148 is a quick coupling element having a first portion 150 which is permanently placed at the gas inlet device 126, and a second portion D, 152 which can be variably connected to a fitting counterpart 154 attached to the sample 118. In a particular embodiment, the first portion 150 may be a quick connect male adapter, while the second portion 152 may be a female quick connect counterpart; however, further embodiments are feasible. As shown in Figure 1, the second valve 156 is further designed for switching between the connection element 130 and the coupling element 148 for supplying the gas stream 114 via the second outlet 158 and the connection element 130 as the gas input stream 161 to the analytical instrument 120.

In further addition to the preferred embodiment of Figure 1, the gas control device 160 in the assembly 116 as illustrated in Figure 2 has a second manometer M2, 166, which can be used for monitoring the second pressure within the gas control device 160. The gas balance stream can be supplied by the third conduit 164, particularly from the adjoining atmosphere. The exemplary gas control device 160 as further depicted in Figure 2 has a further valve 142 which is designed for providing at least one inert carrier gas, especially a noble gas, particularly selected from helium (He), argon (Ar) and/or krypton (Kr); and/or nitrogen (N₂), to the gas output stream 131. In the preferred embodiment of Figure 2, the inert carrier gas is supplied by a source 138 being an external source located outside the gas control device 160, wherein a further conduit 140 provides access to the source 138 of the inert carrier gas. Alternatively or in addition (not depicted here), the source 138 may be embodied within the gas control device 160. In the exemplary embodiment of Figure 2, the gas control device 160, additionally, comprises a further connection element 167, which provides access to the further valve 142, the second valve 164, and second manometer M2, 166. However, further embodiments are feasible.

For further details concerning Figure 2, reference can be made to the description of Figure 1 above.

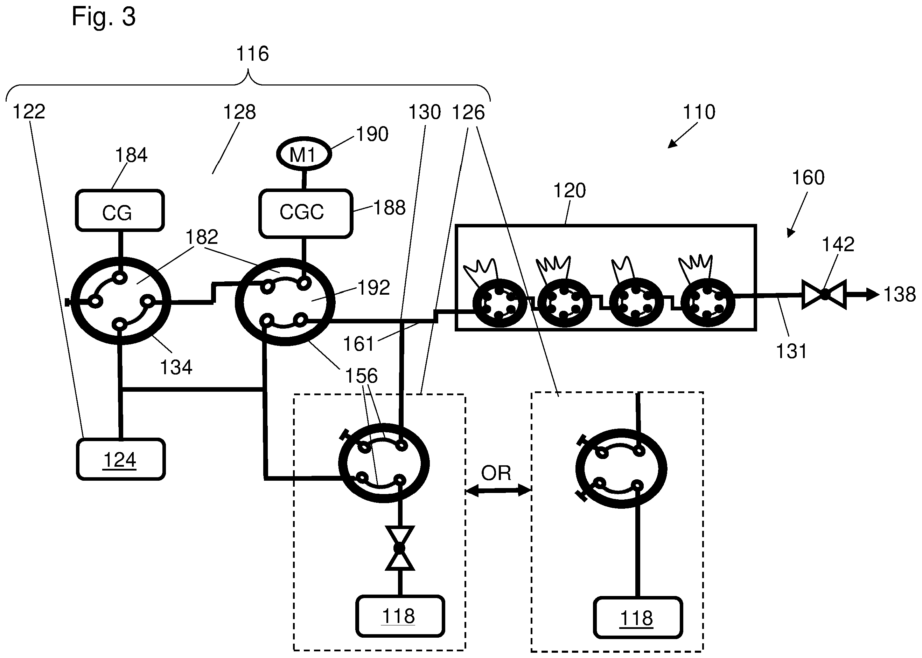

Figure 3 schematically illustrates a further preferred embodiment of the system 110 for determining at least one property of the gaseous component 112 in the gas stream 114 comprising the assembly 116 for supplying the gas stream 114 from the sample 118 to the analytical instrument 120 according to the present invention. In contrast to the embodiment of Figure 2, the assembly 116 as shown in Figure 3 comprises a plurality of automatically controlled valves, preferably a cascade of 4-port 2-position valves. In addition, the pressure can be monitored in an electronically manner, thereby contributing to a more user-friendly fashion. A particular advantage of this embodiment comprises enabling a temperature control of the whole system 110, especially performing an injection of the gas stream 114 at a defined elevated temperature in order to prevent the gas from condensation, preferably within both the gas inlet device 126 and a loop system that may be comprised by the analytical instrument 120.

For further details concerning Figure 3, reference can be made to the description of Figures 1 and 2 above.

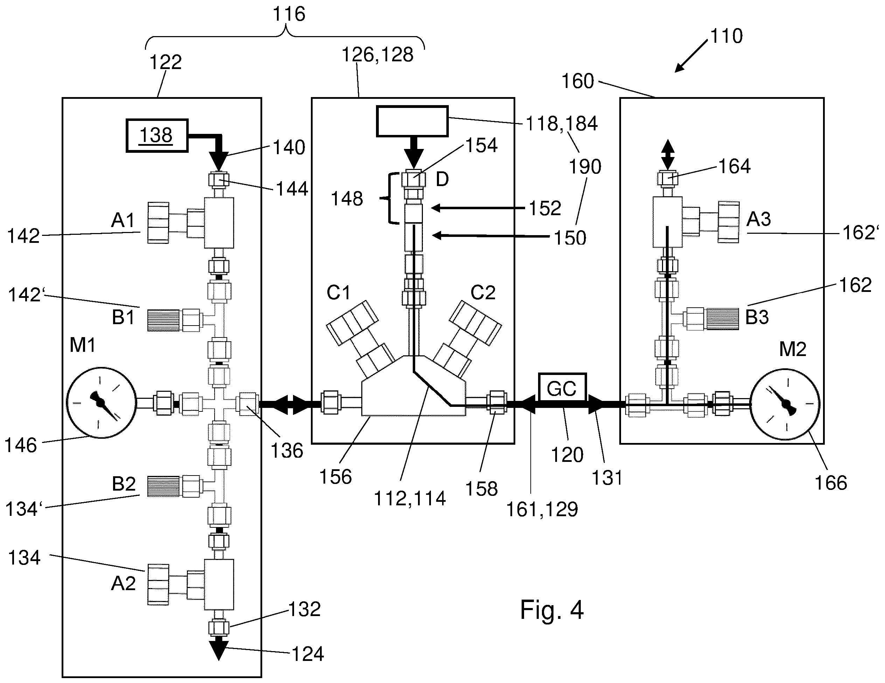

Figure 4 schematically illustrates a further preferred embodiment of a system 110 for determining at least one property of a gaseous component 112 in a gas stream 114, wherein the system 110 comprises an assembly 116 for supplying the gas stream 114 from a sample 118 to an analytical instrument 120 according to the present invention. In contrast to the assembly 116 as illustrated in Figure 2, the vacuum control device 122 as shown in Figure 4 comprises two first valves 134, 134', which are designed for adjusting the vacuum 124. Preferably, the two first valves 134, 134' as depicted here comprise a diaphragm valve A2 and an oil-free and a grease-free needle valve B2. However, using a further type of valve, preferably a multi-port valve, may also be feasible.

The embodiment of the vacuum control device 122 as shown in Figure 4, in addition, comprises further components which are designed for supplying the inert carrier gas, especially the noble gas, particularly selected from helium (He), argon (Ar) and/or krypton (Kr); and/or nitrogen (N₂). In the embodiment of Figure 4, the source 138 of the inert carrier gas is embodied within the vacuum control device 122. Alternatively or in addition (not depicted here), the source 138 may be an external source located outside the vacuum control device 122.

In the embodiment of Figure 4, the vacuum control device 122 comprises the further conduit 140 to the source 138 of the inert carrier gas, the two further valves 142, 142', which are designed for adjusting a stream 144 of the inert carrier gas, and a further manometer M1, 146, which is designed for monitoring a pressure in the vacuum control device 122. Preferably, the two further valves 142, 142' as depicted here comprise a diaphragm valve A1 and an oil-free and a grease-free needle valve B1. However, using a further type of valve, preferably a multi-port valve, may also be feasible.

As a further contrast to the assembly 116 as illustrated in Figure 2, the gas calibration device 128 in the embodiment of Figure 4 is comprised here by the gas inlet device 126. As schematically depicted in Figure 4, the second valve 156 comprised by the gas inlet device 126 may be considered as the third valve 182, which is used for adjusting the access to at least one calibration gas, wherein the sample 118 may be considered as the source 184 of the at least one calibration gas when the sample 118 comprises the at least one calibration gas. As further shown in Figure 4, the second valve 156 is embodied here as a multi-valve manifold, which is designed for controlling the flow of the gas stream 114 and the access of the vacuum 124 by using two membrane valves C1, C2; however, further embodiments of the second valve 156 may also be feasible. Further, a receptacle which comprises the known entire calibration gas as the sample 118 may be considered as the calibration gas container 188, which is designed for receiving the defined portion of the at least one calibration gas CG. Further, the at least one value of the first pressure in the receptacle which comprises the known entire gas volume comprised by the sample 118 may be known or determined by a manometer (not depicted here). Alternatively or in addition, a volume of the adapter that is formed by the first portion 150 of the coupling element 148 may, as further illustrated in Figure 4, be considered as the calibration gas container 188 designed for receiving the defined portion of the at least one calibration gas CG. Herein, the volume of the adapter formed by the first portion 150 of the coupling element 148 and the at least one value of the first pressure therein may be known or determined by a manometer (not depicted here).

As further illustrated in Figure 4, the gas control device 160 has two fifth valves 162, 162', which are designed for adjusting the second pressure of the gas output stream 131. Preferably, the two fifth valves 162, 162' as depicted here comprise a diaphragm valve A3 and an oil-free and a grease-free needle valve B3. However, using a further type of valve, preferably a multi-port valve, may also be feasible.

For further details concerning Figure 4, reference can be made to the description of Figures 1 and 2 above.

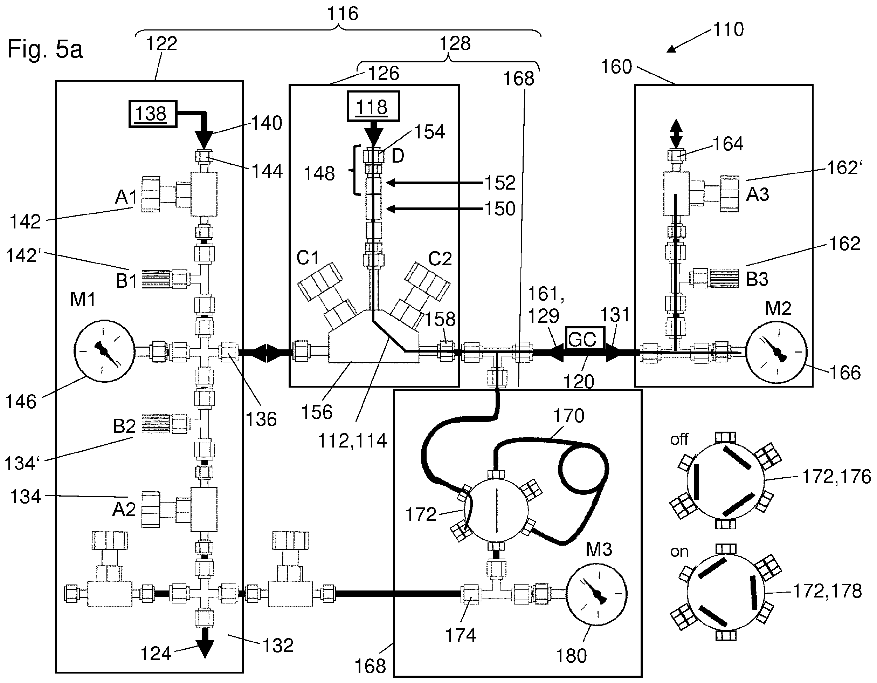

Figure 5a schematically illustrates a further embodiment of the system 110 for determining at least one property of the gaseous component 112 in the gas stream 114 comprising the assembly 116 for supplying the gas stream 114 from the sample 118 to the analytical instrument 120 according to the present invention. In addition to the embodiment of Figure 4, the assembly 116 as shown in Figure 5a further comprises a volume control device 168 configured for determining a volume of the gas stream 114. As depicted there, the volume control device 168 has a sample loop 170, which has a known volume and is, thus, designed for receiving a known volume of the gas stream 114.

Further, the volume control device 168 has a seventh valve 172 which is connected to a fourth conduit 174 to the vacuum 124, to the second outlet 158 as comprised by the gas inlet device 126, and to the at least one sample loop 170. The fourth conduit 174 may directly be connected to the vacuum 124, or, as depicted in Figure 5a, via the first conduit 132 as comprised by the vacuum control device 122. However, still further embodiments may also be feasible.

The seventh valve 172 may, preferably, have at least six ports and at least two positions. However, further kinds of valves may also be feasible. As schematically depicted in the bottom of Figure 5a, the seventh valve 172 may be capable of assuming two different positions, an OFF position 176 and an ON position 178. The bars indicate flow paths in the OFF position 176 and in the ON position 178, respectively. Herein, vacuum is provided to the sample loop 170 in the OFF position 176, while the known volume of the gas stream 114 is provided to sample loop 170 in the ON position 178.

As further shown in Figure 5a, the volume control device 168 comprises a third manometer 180 which is designed for monitoring a third pressure that is prevailing in the volume control device 168. Preferably, the third manometer 180 is an electronic manometer having a reading accuracy of 5 mbar, more preferred of 1 mbar, in particular of 0.1 mbar, and accuracy of less than 0.5 %, more preferred of less than 0.25 %, in particular of less than 0.2 % full scale output.

In a particular embodiment, the gas calibration device 128 may be constituted by a combination of the gas inlet device 126 and the volume control device 168. As schematically depicted in Figure 5a, the second valve 156 comprised by the gas inlet device 126 may be considered as the third valve 182, which is used for adjusting the access to at least one calibration gas, wherein the sample 118 may be considered as the source 184 of the at least one calibration gas when the sample 118 comprises the at least one calibration gas. The sample loop 170, which has a known volume may be considered as the calibration gas container 188, which is designed for receiving the defined portion of the at least one calibration gas CG. Further, the at least one value of the first pressure in the sample loop 170 which may be considered as the calibration gas container 188 and may, thus, comprise the known entire calibration gas volume may be determined by using the third manometer 180. Further, the seventh valve 172 may be considered as the third outlet 194 which is designed for supplying the calibrated gas input stream 129 via the connection element 130 to the analytical instrument 120.

For further details concerning Figure 5a, reference can be made to the description of Figures 1, 2 and 4 above.

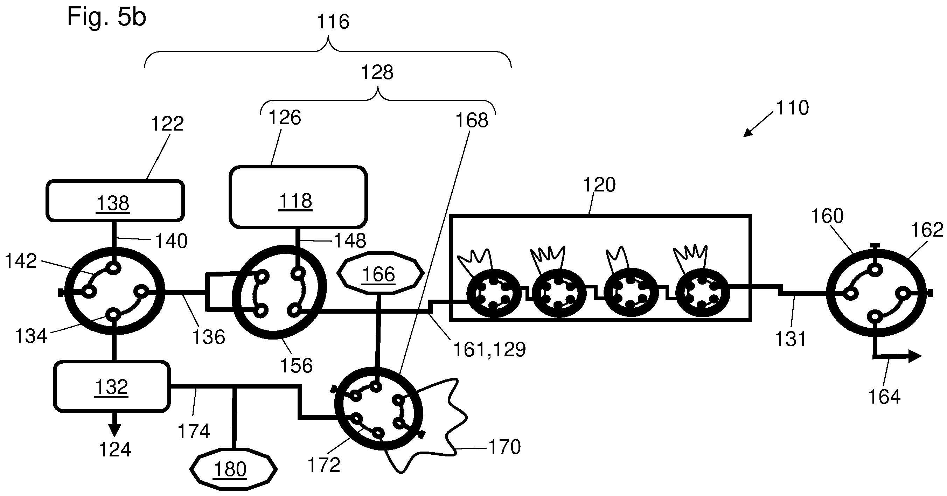

Figure 5b schematically illustrates a further preferred embodiment of the system 110 for determining at least one property of the gaseous component 112 in the gas stream 114 comprising the assembly 116 for supplying the gas stream 114 from the sample 118 to the analytical instrument 120 according to the present invention. In contrast to the embodiment of Figure 5a, the assembly 116 as shown in Figure 5b comprises a plurality of automatically controlled valves, preferably a cascade of 4-port 2-position valves and/or 6-port 2-position valves. In addition, the pressure can be monitored in an electronically manner, thereby contributing to a more user-friendly fashion. As in the embodiment of Figure 3, the particular advantage of this embodiment comprises enabling a temperature control of the whole system 110, especially performing an injection of the gas stream 114 at a defined elevated temperature in order to prevent the gas from condensation, preferably within both the gas inlet device 126 and a loop system that may be comprised by the analytical instrument 120.

For further details concerning Figure 5b, reference can be made to the description of Figures above.

Further preferred embodiments of the system 110 for determining at least one property of the gaseous component 112 in the gas stream 114 comprising the assembly 116 for supplying the gas stream 114 from the sample 118 to the analytical instrument 120 according to the present invention may arise from a combination of features in any one of the embodiments as presented in Figures 2 to 5.

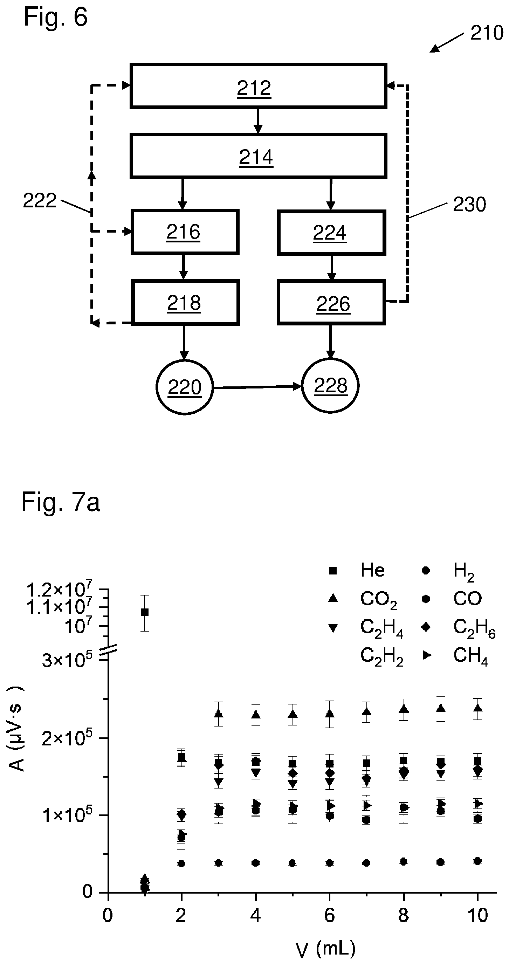

Figure 6 illustrates a preferred embodiment of a method 210 for supplying the gas stream 114 from the sample 118 to the analytical instrument 120 by using the assembly 116 according to the present invention.

In an evacuating step 212 according to step a), the assembly 116, in particular the conduits and receptacles which are comprised by the assembly 116, is evacuated by providing access to the vacuum 124 by using the vacuum control device 122. For this purpose,
- in the embodiments of Figures 1 to 3, the first valve 134 and the second valve 156 are maintained open for a first period of time to provide the desired access to the vacuum 124;
- while in the embodiments of Figures 4 and 5,
   ∘ one or both of the two further valves A1, B1 142, 142' are closed to impede a flow of the stream 144 of the inert carrier gas;
   ∘ both of the two first valves 134, 134'A2, B2 are maintained open to provide the desired access to the vacuum 124;
   ∘ both valves C1, C2 of the second valve 156 are maintained open to fully evacuate the conduits of the gas inlet device 126; and
   ∘ one or both the two fifth valves A3, B3 162, 162' are closed to inhibit a gas exchange via the third conduit 164 in the gas control device 160.

In a terminating step 214 further according to step a), the access to the vacuum 124 for the gas inlet device 126 is terminated after a first period of time by closing the second valve 156 to allow connecting the sample 118, either directly as in the embodiments of Figures 1, 3, and 5b, or via the coupling element 148 according to the embodiment of Figures 2, 4 and 5a. In the particular embodiments of Figures 4 and 5a, the valve C1 as comprised by the second valve 156 is closed.

In a first supplying step 216 according to step b), the calibrated gas input stream 129 is supplied via the connection element 130 to the at least one analytical instrument 120. In the exemplary embodiment of Figure 2, the first valve 134 and the fourth valve 192 are maintained open until a first target negative pressure is prevailing in the assembly 116 as monitored by the first manometer 190 and the second manometer 166, whereinafter the fourth valve 192 is closed. Thereafter, the third valve 182 is maintained open for a second period of time until a target negative pressure is prevailing in the calibration gas container 188 which allows filling the calibration gas container 188 with the desired amount of calibration gas. Thereafter, the third valve 182 is closed and a value for the first pressure at the first manometer 190 is recorded. Thereafter, the fourth valve 192 is maintained open for a third period of time until the value for the second pressure at the second manometer 166 equals the value for the first pressure at the first manometer 190. As used herein, the term "equal" or any grammatical variation thereof indicates a deviation between two values which are below a threshold of 10 %, preferably of 1 % , more preferred of 0.1 %.

In a first measuring step 218 further according to step b), a further period of time is provided for performing one or more calibration measurements in the analytical instrument 120 for determining at least one property 220 of the gaseous component 112 in the calibrated gas input stream 129. As already indicated above, the at least one property does, however, not include a pressure, a partial pressure, or a volume of the gaseous component 112.

In a preferred embodiment, the first supplying step 216 and the first measuring step 218 can be performed in form of at least one repeated calibration cycle 222, wherein each calibration cycle 22 may start with the first supplying step 216 and continues with the first measuring step 218. After each measuring step 216, a new calibration cycle 222 can, preferably, be started by performing the evacuating step 212 and the subsequent terminating step 214, in particular to ensure that no traces of a previously measured gaseous component 112 may remain in the assembly 116. As an alternative, repeating the evacuating step 212 and the subsequent terminating step 214 can, particularly, be omitted during a calibration cycle 222 in an embodiment in which an increasing amount of a particular gaseous component may be comprised by the calibrated gas input stream 129. In this manner, consecutive calibrated gas input stream 129 can, subsequently be measured. However, further examples are feasible.

In a second supplying step 224 according to step c), the gas stream 114 is supplied from the sample 118 either directly as in the embodiments of Figures 1, 3, and 5b, or via the coupling element 148 according to the embodiment of Figures 2, 4 and 5a to the gas inlet device 126. In embodiments of Figures 2 and 4 as described above, the quick connect male adapter, which constitutes the first portion 150 of the coupling element 148, is closed when disconnected is opened by connecting it to the corresponding female quick connect counterpart, which constitutes the second portion 152 of the coupling element 148 being located at the sample 118. In the exemplary embodiment of Figure 2, the first valve 134 and the fourth valve 192 are maintained open until a first target negative pressure is prevailing in the assembly 116, whereinafter the fourth valve 192 is closed. Thereafter, the second valve 156 is maintained open and the value for the second pressure is recorded at the second manometer 166. Thereafter, the fourth valve 192 is opened for recording the value for the first pressure at the first manometer 190. By gas insertion, the conduits of the gas inlet device 126, of the connection element 130 and of the gas control device 160 are filled with the gas stream 114 provided by the sample 118. This filling of the conduits can be controlled by monitoring a second pressure at the second manometer M2, 166.

In a second measuring step 226 further according to step c), a further period of time is provided for performing one or more measurements in the analytical instrument 120 for determining at least one property 228 of the gaseous component 112 in the gas stream 114. As already indicated above, the at least one property does, however, not include a pressure, a partial pressure, or a volume of the gaseous component 112. As described below in more detail, determining of the at least one property 228 of the gaseous component 112 in the gas stream 114 comprises considering the at least one property 220 of the gaseous component 112 in the calibrated gas input stream 129.

In a preferred embodiment, the second supplying step 224 and the second measuring step 226 can be performed in form of repeated measuring cycles 230, wherein each measuring cycle starts with the evacuating step 212 and the subsequent terminating step 214, continues with the second supplying step 224, and terminates with second measuring step 226. After each second measuring step 226, a new measuring cycle 230 is started by performing the evacuating step 212, in particular to ensure that no traces of a previously measured gaseous component 112 may remain in the assembly 116. In this manner, consecutive gas streams 114 that may originate from a single sample 118 can, subsequently be measured. Alternatively or in addition, a number of gas streams 114 that may originate from different samples 118 can, subsequently be measured. However, further embodiments are feasible.

In this further preferred embodiment, the method 210 may, further, comprise a flushing step according to step e), which comprises flushing the assembly 116 by providing the stream 144 of the inert carrier gas by using the vacuum control device 122. For this purpose, in the embodiments of Figures 4 and 5
- both two further valves A1, B1 142, 142' are open to generate the desired flow of the stream 144 of the inert carrier gas;
- one or both of the two first valves 134, 134'A2, B2 are closed to impede the access to the vacuum 124;
- both valves C1, C2 of the second valve 156 are open to fully flush the conduits of the gas inlet device 126 with the stream 144 of the inert carrier gas; and
- both fifth valves A3, B3 162, 162' are open to fully flush the conduits of the gas control device 160.

In this manner, the conduits and receptacles comprised by the assembly 116 can be emptied from the gas stream 114 and filled with the inert carrier gas. A similar procedure can also be applied in the embodiments of Figures 1 to 3 as the person skilled in the art easily recognizes.

In a particular embodiment, the method 210 may, further, comprise a determining step according to step d), which comprises determining a volume of the gas stream 114 by using the volume control device 168. The determining step may be performed after the evacuating step 212, preferably during the second supplying step 224, after the supplying step 224; during the measuring step 226 and/or after the measuring step 226.

In a first embodiment, the exemplary assembly 116 of Figures 1, 2, and 4 can be used for determining an absolute amount of the gaseous component 112 in the gas stream 114 by supplying the known entire gas volume which is comprised by the sample 118 to the analytical instrument 120.

In a further embodiment, the exemplary assembly 116 of Figures 1, 2 and 4 can, further, be used for determining an absolute amount of the gaseous component 112 in the gas stream 114 by applying the following steps:
(i) an introducing step, which comprises introducing a defined amount of at least one inert gas, in particular krypton (Kr) or a mixture of Kr and argon (Ar), into the sample 118, in particular by using a syringe or a click connect port, thereby generating a gas mixture comprising the defined amount of the at least one inert gas and the gaseous component 112 in the sample 118 to be determined;
(ii) a modified supplying step, wherein the sample is attached to the gas inlet device 126, thereby supplying the gas mixture into the assembly 116;
(iii) a modified measuring step, whereby the defined amount of the at least one inert gas, in particular the Kr, within the gas mixture is measured by using the analytical instrument 120; and
(iv) an analyzing step, which comprises determining an absolute amount of the gaseous component 112 in the gas stream 114, wherein a precisely defined quantities of both the at least one inert gas, in particular the Kr, and of the gaseous component 112 from the sample 118 are used, whereby, particularly, a dilution of the gaseous component 112 from the sample 118 by using the defined amount of the at least one inert gas, in particular Kr, can be determined.

In this manner, quantitative amounts of the gaseous component 112 in the sample 118 can be determined by using the exemplary assembly 116 of Figures 1, 2 and 4 without requiring the volume control device 168 as comprised by the exemplary assembly 116 of Figure 5a or 5b. This manner of determining the quantitative amounts of the gaseous component 112 in the sample 118 can be used as an alternative or in addition to the determination of the volume of the gas stream 114 by using the volume control device 168 according to the exemplary assembly 116 of Figure 5a or 5b, especially in order to provide a second independent determination of the gas volume and/or to reduce an error of the determining step.

Determining an absolute amount of a gas can, preferably, be performed in a particular embodiment according to the following manner. In principal, it is assumed that the requirements of the well-known ideal gas equation *pV* = *nRT,* wherein *p* denotes a pressure, *V* a volume, *n* a total amount of gas, *R* the gas constant, and *T* the temperature of the gas are met during the determining step according to step d). Initially, the entire volume *V*ₛ of the gas sample is located in a container in the sample 118 comprising the gas having a volume *V*₁ and a pressure *p*₁ (e.g. *p*₁ = 1 atm). During the second supplying step 224, the whole gas sample is supplied to the assembly 116 having a volume of *V*ₚ₁ + *V*ₐ, wherein *V*ₚ₁ denotes the volume of the conduits of the assembly 116 and *V*ₐ the volume of the adapter formed by the first portion 150 of the coupling element 148, resulting a pressure *p*₂ in the conduits of the assembly 116. The difference between the pressure *p*₂ and the pressure *p*₁ can be expressed as Δ*u.* For gas calibration, an amount of gas *n*ᵢ which is comprised by the calibration gas having a mole fraction *α*, can be obtained according to equation (1) as ${n}_{i} = α n = α \frac{{V}_{1} {p}_{1}}{R T}$ (1)

In a still further embodiment, the absolute amount of the gaseous component 112 in the gas stream 114 can be determined during the determining step by using the exemplary assembly 116 of Figure 5a or 5b. After controlling the filling of the conduits by monitoring the second pressure on the second manometer M2, 166 in the gas control device 160, the third pressure at the manometer M3, 180 in the volume control device 168 is monitored. Subsequently, the seventh valve 172 as further comprised by the volume control device 168 is switched in a manner that a portion of the gas stream 114 is supplied to the sample loop 170 having a known volume, whereby the pressure in the assembly is diminished, which can be monitored by the second manometer M2, 166. Preferably, the second measuring step 226 can be started after supplying the portion of the gas stream 114 to the sample loop 170. Since the number of molecules in the gas stream 114 which are supplied to the analytical instrument 120 is decreased by supplying the portion of the gas stream 114 to the sample loop 170, the measuring step 226 can, alternatively or in addition, be started prior to filling the sample loop 170 with the portion of the gas stream 114 has commenced. However, further embodiments are feasible.

For determining the absolute amount of a gas, it is assumed here that all conduits of the exemplary assembly 116 according Figure 5a or 5b are completely evacuated and that the ideal gas equation as presented above is valid for all gases at each state. Additionally, it is assumed that the volume *V*ₚ₂ of the gas inlet device 126 as well as the volume *V*ₐ of the adapter formed by the first portion 150 of the coupling element 148 is constant over the whole measuring step 226. In addition to the considerations as presented above, the sample loop 170 in the volume control device 168 can, additionally, be filled.

In a first step, the volume *V*ₚ₂ of the conduits in the gas inlet device 126 can be determined. By using syringe injection, the whole syringe volume *V*₁, which is in a syringe under a known pressure *p*₀, e.g. a laboratory pressure, can be injected into the completely evacuated volumes *V*ₚ₂ + *V*ₐ when
- the valve C1 of the second valve 156 is closed;
- the valve C2 of the second valve 156 is open;
- the seventh valve 172 in the OFF position 176 as shown in Figure 5a; and
- one or both the two fifth valves A3, B3 162, 162' in the gas control device 160 are closed.

The pressure in the assembly 116 after supplying the gas is *p*₂ = *p*₀ + Δ*p*₁*,* wherein *Δp*₁ denotes a differential pressure between a normal pressure *p*₀ and a conduit pressure *p*₂ after supplying, i.e. Δ*p*₁ *= p*₂ *- p*₀*,* and wherein the volume is defined as *V*₂ = *V*ₚ₂ + *V*ₐ.

Thereafter, the coupling element 148 can be disconnected without gas lost, whereby a newly assumed state in the exemplary assembly 116 of Figure 5a can be defined as *V*₂ₐ = *V*ₚ₂ and *p*₂ₐ = *p*₂ *= p*₀ + Δ*p*₁*.* The sample loop 170 having the known volume *V*ₗₒₒₚ is, subsequently, connected by switching the seventh valve 172 into the ON position 178 as shown in Figure 5a, and the differential pressure is determined. The supplied gas now occupies the volume *V*₃ = *V*ₚ₂ + *V*ₗₒₒₚ at a pressure *p*₃ *= p*₀ + Δ*p*₂, wherein Δ*p*₂ corresponds to a modified differential pressure between the normal pressure *p*₀ and the modified pressure *p*₃ in the conduits of the assembly 116. As a result, the volume *V*ₚ₂ of the conduits can be determined according to Equation 2 as ${V}_{p 2} = \frac{{p}_{0} + Δ {p}_{2}}{Δ {p}_{1} - Δ {p}_{2}} {V}_{loop}$ (2)

In a second step, the first step is repeated without disconnecting the coupling element 148 in order to determine the volume of the adapter formed by the first portion 150 of the coupling element 148. Herein,
- the gas to be supplied to the assembly 116 of Figure 2a has a volume *V*₁ and a pressure *p*₀;
- the whole gas sample is supplied to the conduits in the gas inlet device 126 having a volume of *V*₂ = *V*ₐ + *V*ₚ₂ and a pressure of *p*₂ *= p*₀ + Δ*p*₁; and
- the supplied gas now occupies the volume *V*₃ = *V*ₐ + *V*ₚ₂ + *V*ₗₒₒₚ under a pressure of *p*₃ *= p*₀ *+* Δ*p*₂*.*

As a result, the adapter volume *V*ₐ can be determined according to Equation 3 as ${V}_{a} = \frac{{p}_{0} + Δ {p}_{2}}{Δ {p}_{1} - Δ {p}_{2}} {V}_{loop} - {V}_{p 2}$ (3)

Apparently, the absolute value Δ*p*₂ in Equations (2) and (3) differs with respect to each other.

Calibration data can now be determined based on a knowledge of the volumes *V*ₚ₂ and *V*ₐ in the exemplary assembly 116 of Figure 5a. A known volume of calibration gas is supplied through the coupling element 148 having the volume *V*ₐ into the volume *V*ₚ₂ of the conduits in the gas inlet device 126. Using the ideal gas equation, an amount *n*ᵢ of calibration gas species *i* can be determined according to *n*ᵢ *= α*ᵢ*·n =* (*α*ᵢ·*p·V*)/(*R*·*T*), wherein *p* denoted the laboratory air pressure, *α*ᵢ a mol fraction of compound *i* in the gas mixture, Tthe temperature, V the syringe volume, and *α* a mole fraction of species *i* in the calibration gas. The number of particles *n*ₚ (moles) in the pipe volume *V*_{p,}i now equals Equation (4) ${n}_{p , i} = \frac{{n}_{i} {V}_{p 2}}{{V}_{p 2} + {V}_{a}}$ (4)

Different volumes of the calibration gas injected into the assembly 116 of Figure 5a allow a determination of a correlation between the area of a signal which is generated by the gas chromatography device GC for the amount *n*ᵢ of the calibration gas species *i* and the number of particles *n*ₚ in the volume the calibration gas species *I* assume in the conduits of the exemplary assembly 116 of Figure 5a.

Thereafter, the sample gas can then be measured with both, unknown individual (*n*ᵢ) and unknown total gas amounts ( ${n}_{s} = {\sum }_{i = 1}^{m} {n}_{i}$) of all gas species *m* in a container comprising the sample 118 having the gas volume *V*₁ = V at pressure *p*₁ = *p*ₛ, wherein the volume *V* is assumed to remain constant during the measurement, in particular by using a gas container, or a pouch-bag cell having gas tubes without electrode compressibility. As soon as the container is connected and the sample gas has been supplied to the assembly 116 having the volume *V*ₚ₂, the assembly 116 exhibits the states *n*₂ *= nₛ, p*₂ = *p*₀ + Δ*p*₁ and *V*₂ = *V*ₛ + *V*ₚ₂, wherein Δ*p*₁ the differential pressure between a normal pressure *p*₀ and a conduit pressure *p*₂ after suppling, as displayed by the second manometer M2, 166. The determination of the gas volume is now performed using the volume control device by increasing the volume by the loop volume *V*ₗₒₒₚ to a new state having *V*₃ = *V*ₛ + *V*ₚ₂ + *V*_{L} and *p*₃ = *p*₀ + Δ*p₂,* whereby a determination of *V*ₛ and of the total particle number (*nₛ*) can be performed according to Equation 5 by ${V}_{s} = \frac{{p}_{0} + Δ {p}_{2}}{Δ {p}_{1} - Δ {p}_{2}} {V}_{loop} - {V}_{p} ; {n}_{s} = \frac{{p}_{3} \left({V}_{s}+{V}_{p 2}+{V}_{loop}\right)}{RT}$ (5)

Thereafter, the second measuring step 226 can be started. By using both measurement results and calibration data, the absolute amount *n*ᵢ of species *i* in the volume *V*ₚ₂ can be determined. From this, the total volume *V*ₜₒₜₐₗ can be used to determine the total amount of substance of species *i* (in moles) as well as a mole fraction *α*ᵢ of the species *i* in the sample gas in ppm according to Equation 6 ${n}_{i} = \frac{{n}_{p , i} \left({V}_{s}+{V}_{p 2}+{V}_{loop}\right)}{{V}_{p 2}} and {α}_{i} = \frac{{n}_{i}}{{n}_{s}}$ (6)

The quantities which are determined according to Equation (6) are the actual gas quantities formed in the container of the sample 118, thus enabling a direct determination of a single gas quantity formed without using an internal standard and without external gas volume determination.

In alternative embodiment, the second measuring step 226 can be performed prior to the determining step, e.g. when the gas volume is too small to be detected in the gas chromatography device GC. However, using loops in the analytical instrument 120, particularly in the gas chromatography device GC, results in an additional modification of the gas content in the conduits of the assembly 116 system. A corresponding adaption of Equation 5 results in Equation 7 as ${V}_{s} = \frac{{p}_{0} + Δ {p}_{3}}{Δ {p}_{2} - Δ {p}_{3}} {V}_{loop} - {V}_{p} and {n}_{s} = \frac{{p}_{0} + Δ {p}_{1}}{RT} \frac{{p}_{0} + Δ {p}_{3}}{Δ {p}_{2} - Δ {p}_{3}} {V}_{loop}$ (7).

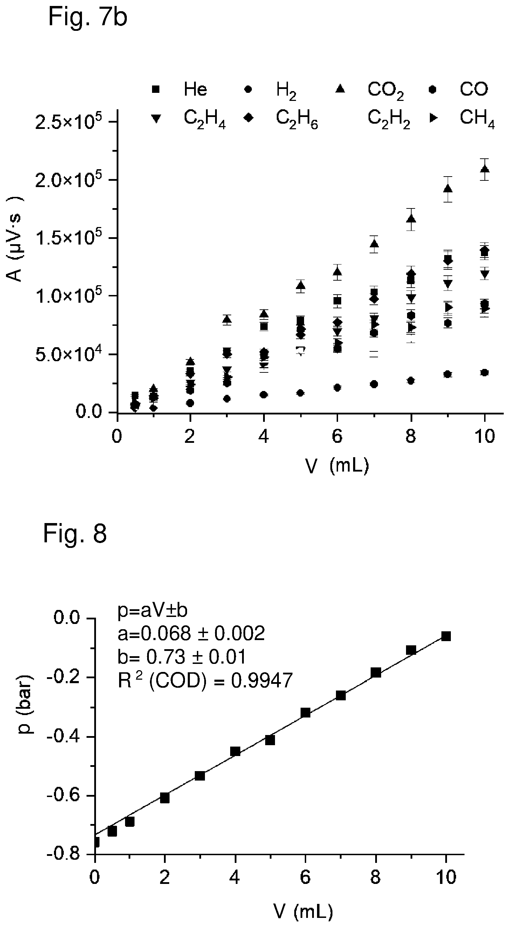

Figure 7 illustrates experimental results, which demonstrate a correlation of a peak area A in *µV·s* versus an injected volume *V* of calibration gas mixtures in milliliters (*mL*) for various indicated gases. For this purpose, selected gas amounts of 0.5 *mL* to 10 *mL* of a calibration gas were injected by syringe using a septum closed adapter.

Figure 7a shows the results when a prior art setup is used for this purpose. Herein, the peak areas *A* of the gases is increasing until an injection volume of approx. 3 *mL* is reached, whereas the peak areas *A* remain constant above the injection volume of approx. *3 mL.* As a particular disadvantage, the minimum amount of 3 *mL* is also quite high. This behavior can be explained by considering a backflush of helium gas of individual columns within the gas chromatography device GC when they are not used.

In contrast hereto, Figure 7b shows the results when the assembly 116 of any one of Figures 1 to 5 according to the present invention is used. Herein, the signal area *A* increases depending on the amount of gas as introduced. Depending on a sensitivity of the selected gas, different areas *A* having different linear gradients are received, wherein hydrogen (H₂) exhibits the smallest slope, while carbon dioxide (CO₂) exhibits the strongest slope.

Figure 8 illustrates a gas volume dependent pressure obtained by using the assembly 116, of any one of Figures 1 to 5, according to the present invention. A linear relationship *p* = *aV + b* between gas volume *V* and pressure *p* having a high correlation coefficient *R²(COD) = 0.9947* can clearly be observed. This observation can be used as a basis for determining the injected volume of the gas based on the second pressure detected by the second manometer M2, 166 during engagement of the sample loop 170. In addition, the correlation between the gas volume *V* and the pressure *p* allows the determination of the total amount of gas injected in order to obtain a semi-quantitative information about the analyzed gas. Figure 8 shows that the linear relationship *p = aV + b* is maintained, independently from an increase of the input gas volume *V* having a pressure *p* increasing into the positive range.

### List of Reference Signs

- 110: system for determining at least one property of a gaseous component in a gas stream
- 112: gaseous component
- 114: gas stream
- 116: assembly for supplying a gas stream from a sample to at least one analytical instrument
- 118: sample
- 120: analytical instrument
- 122: vacuum control device
- 124: vacuum
- 126: gas inlet device
- 128: gas calibration device
- 129: calibrated gas input stream
- 130: connection element
- 131: gas output stream
- 132: first conduit
- 134, 134': first valve
- 136: first outlet
- 138: source
- 140: further conduit
- 142, 142': further valve
- 144: stream of inert carrier gas
- 146: further manometer
- 148: coupling element
- 150: first portion
- 152: second portion
- 154: counterpart
- 156: second valve
- 158: second outlet
- 160: gas control device
- 161: gas input stream
- 162, 162': fifth valve
- 164: third conduit
- 166: second manometer
- 167: further connection element
- 168: volume control device
- 170: sample loop
- 172: seventh valve
- 174: fourth conduit
- 176: OFF position
- 178: ON position
- 180: third manometer
- 182: third valve
- 184: source of calibration gas
- 186: second conduit
- 188: calibration gas container
- 190: first manometer
- 192: fourth valve
- 194: third outlet
- 200: assembly control device
- 202: wireless or wire-bound connection
- 204: monitor
- 206: keyboard
- 210: method for supplying a gas stream from a sample to at least one analytical instrument
- 212: evacuating step
- 214: terminating step
- 216: first supplying step
- 218: first measuring step
- 220: property of gaseous component in the calibrated gas input stream
- 222: calibration cycle
- 224: second supplying step
- 226: second measuring step
- 228: property of gaseous component in the gas stream
- 230: measuring cycle

## Claims

1. An assembly (116) for supplying a gas stream (114) from a sample (118) to at least one analytical instrument (120), comprising
- a vacuum control device (122) configured for controlling access to a vacuum (124), having
∘ at least one first valve (134, 134') designed for adjusting the access to the vacuum (124);
- a gas inlet device (126) configured for supplying the gas stream (114) from the sample (118), having
∘ a second valve (156) designed for adjusting the gas stream (114) provided by the sample (118);
- a gas calibration device (128) configured for providing a calibrated gas input stream (129) to the at least one analytical instrument (120), having
∘ a third valve (182) designed for adjusting access to at least one calibration gas, and
∘ a calibration gas container (188) designed for receiving a portion of the at least one calibration gas; and
- at least one connection element (130) configured for supplying the gas stream (114) as a gas input stream (161) or the calibrated gas input stream (129) to the at least one analytical instrument (120), providing access to
∘ the at least one analytical instrument (120),
∘ the vacuum control device (122),
∘ the gas inlet device (126), and
∘ the gas calibration device (128).

2. The assembly (116) according to the preceding claim, wherein the gas calibration device (128) is further configured for supplying the gas stream (114) from the sample (118), wherein the third valve (182) is further designed for adjusting the gas stream (114) provided by the sample (118).

3. The assembly (116) according to any one of the preceding claims, wherein the gas calibration device (128) further comprises at least one of
∘ a first manometer (190) designed for at least one of:
▪ recording a first pressure in the calibration gas container (188);
▪ controlling the third valve (182) for adjusting the first pressure in the calibration gas container (188), and
∘ a fourth valve designed (192) for adjusting the calibrated gas input stream (129).

4. The assembly (116) according to any one of the preceding claims, wherein the gas calibration device (128) is embodied as a device being separate from the gas inlet device (126).

5. The assembly (116) according to any one of the preceding claims, wherein the gas calibration device (128) is comprised by the gas inlet device (126).

6. The assembly (116) according to any one of the preceding claims, wherein the gas inlet device (126) further comprises
∘ a coupling element (148) designed for providing a coupling to the sample (118) for receiving the gas stream (114) from the sample (118).

7. The assembly (116) according to any one of the preceding claims, further comprising
- a gas control device (160) configured for receiving a gas output stream (131) from the at least one analytical instrument (120), having at least one of:
∘ at least one fifth valve (162, 162') designed for adjusting a second pressure of the gas output stream (131); or
∘ a closure designed for hermetically sealing at least one output of the at least one analytical instrument.

8. The assembly (116) according to any one of the preceding claims, further comprising
- a volume control device (168) configured for determining a volume of the gas stream (114), having
∘ at least one sample loop (170) or calibration gas container (188) designed for receiving a known volume of the gas stream (114).

9. The assembly (116) according to the preceding claim, wherein the volume control device (168) further comprises a third manometer (180).

10. The assembly (116) according to any one of the preceding claims, further comprising
- an assembly control device (200) configured for controlling gas streams in the assembly (116), wherein the assembly control device (200) is configured to
∘ switch at least the at least one first valve (134, 134'), the second valve (156), and the third valve (182), and
∘ drive and to read out the first manometer (190).

11. The assembly (116) according to the preceding claim, wherein the at least one analytical instrument (120) is further configured to control the assembly control device (200).

12. A system (110) for determining at least one property of a gaseous component (112) in a gas stream (114), comprising
- the assembly (116) for supplying a gas stream (114) from a sample (118) to at least one analytical instrument (120) according to any one of the preceding claims; and
- the at least one analytical instrument (120).

13. A use of the system (110) according to claim 12 for a quantitative measurement of a gaseous component (112) in a gas stream (114).

14. A method (210) for supplying a gas stream (114) from a sample (118) to at least one analytical instrument (120) by using an assembly (116) for supplying the gas stream (114) from the sample (118) to the at least one analytical instrument (120) according to any one of preceding claims referring to the assembly (116), the method (210) comprising the following steps:
a) evacuating the assembly (116) by providing access to a vacuum (124) by using the vacuum control device (122); and terminating the access to the vacuum (124);
b) supplying a calibrated gas input stream (129) at least once to the at least one analytical instrument (120); and providing time for performing at least one calibration measurement in the at least one analytical instrument (120) for determining at least one property (220) of at least one gaseous component (112) in the calibrated gas input stream (129); and
c) supplying gas (114) stream from the sample (118) to the gas inlet device (126); and providing time for performing at least one measurement in the at least one analytical instrument (120) for determining at least one property (228) of at least one gaseous component (112) in the gas stream (114) by considering the at least one property (220) of the at least one gaseous component (112) in the calibrated gas input stream (129).

15. The method (210) according to any one of the preceding method claims, comprising a further step of
d) determining a volume (224) of the gas stream (114) by using at least one of
∘ a defined amount of at least one inert gas;
∘ the calibration gas container (188); or
∘ a volume control device (168) according to any one of claims 8 to 9.

## Patentansprüche

1. Anordnung (116) zum Zuführen eines Gasstroms (114) aus einer Probe (118) zu wenigstens einem Analyseinstrument (120), umfassend
- eine Vakuumsteuervorrichtung (122), eingerichtet zum Steuern eines Zugangs zu einem Vakuum (124), aufweisend
∘ wenigstens ein erstes Ventil (134, 134'), eingerichtet zum Einstellen des Zugangs zu dem Vakuum (124);
- eine Gaseinlassvorrichtung (126), eingerichtet zum Zuführen des Gasstroms (114) aus der Probe (118), aufweisend
∘ ein zweites Ventil (156), eingerichtet zum Einstellen des von der Probe (118) bereitgestellten Gasstroms (114);
- eine Gaskalibriervorrichtung (128), eingerichtet zum Bereitstellen eines kalibrierten Gaseingangsstroms (129) zu dem wenigstens einen Analyseinstrument (120), aufweisend
∘ ein drittes Ventil (182), eingerichtet zum Einstellen eines Zugangs zu wenigstens einem Kalibriergas, und
∘ einen Kalibriergasbehälter (188), eingerichtet zum Aufnehmen eines Teils des wenigstens einen Kalibriergases; und
- wenigstens ein Verbindungselement (130), eingerichtet zum Zuführen des Gasstroms (114) als einen Gaseingangsstrom (161) oder des kalibrierten Gaseingangsstroms (129) zu dem wenigstens einen Analyseinstrument (120), um Zugang bereitzustellen zu
∘ dem wenigstes einen Analyseinstrument (120),
∘ der Vakuumsteuervorrichtung (122),
∘ der Gaseinlassvorrichtung (126) und
∘ der Gaskalibriervorrichtung (128).

2. Anordnung (116) nach dem vorstehenden Anspruch, wobei die Gaskalibriervorrichtung (128) ferner eingerichtet ist zum Zuführen des Gasstroms (114) aus der Probe (118), wobei das dritte Ventil (182) ferner eingerichtet ist zum Einstellen des von der Probe (118) bereitgestellten Gasstroms (114).

3. Anordnung (116) nach einem der vorstehenden Ansprüche, wobei die Gaskalibriervorrichtung (128) ferner wenigstens eines umfasst von
∘ einem ersten Manometer (190), eingerichtet für wenigstens eines von:
▪ Aufzeichnen eines ersten Drucks in dem Kalibriergasbehälter (188);
▪ Steuern des dritten Ventils (182) zum Einstellen des ersten Drucks in dem Kalibriergasbehälter (188), und
∘ einem vierten Ventil (192), eingerichtet zum Einstellen des kalibrierten Gaseingangsstroms (129).

4. Anordnung (116) nach einem der vorstehenden Ansprüche, wobei die Gaskalibriervorrichtung (128) als eine von der Gaseinlassvorrichtung (126) getrennte Vorrichtung ausgeführt ist.

5. Anordnung (116) nach einem der vorstehenden Ansprüche, wobei die Gaskalibriervorrichtung (128) von der Gaseinlassvorrichtung (126) umfasst ist.

6. Anordnung (116) nach einem der vorstehenden Ansprüche, wobei die Gaseinlassvorrichtung (126) ferner umfasst
∘ ein Kopplungselement (148), eingerichtet zum Bereitstellen einer Kopplung mit der Probe (118) zur Aufnahme des Gasstroms (114) aus der Probe (118).

7. Anordnung (116) nach einem der vorstehenden Ansprüche, ferner umfassend
- eine Gaskontrollvorrichtung (160), eingerichtet zum Aufnehmen eines Gasausgangsstroms (131) von dem wenigstens einen Analyseinstrument (120), aufweisend wenigstens eines von
∘ wenigstens einem fünften Ventil (162, 162'), eingerichtet zum Einstellen eines zweiten Drucks des Gasausgangsstroms (131); oder
∘ einem Verschluss, eingerichtet zum hermetischen Abdichten wenigstens eines Ausgangs des wenigstens einen Analysengeräts.

8. Anordnung (116) nach einem der vorstehenden Ansprüche, ferner umfassend
- eine Volumensteuervorrichtung (168), eingerichtet zum Bestimmen eines Volumens des Gasstroms (114), aufweisend
∘ wenigstens eine Probenschleife (170) oder einen Kalibriergasbehälter (188), eingerichtet zum Aufnehmen eines bekannten Volumens des Gasstroms (114).

9. Anordnung (116) nach dem vorstehenden Anspruch, wobei die Volumensteuervorrichtung (168) ferner ein drittes Manometer (180) umfasst.

10. Anordnung (116) nach einem der vorstehenden Ansprüche, ferner umfassend
- eine Anordnungssteuervorrichtung (200), eingerichtet zum Steuern von Gasströmen in der Anordnung (116), wobei die Anordnungssteuervorrichtung (200) eingerichtet ist zum
∘ Schalten wenigstens des wenigstens einen ersten Ventils (134, 134'), des zweiten Ventils (156) und des dritten Ventils (182), und
∘ Ansteuern und Auslesen des ersten Manometers (190).

11. Anordnung (116) nach dem vorstehenden Anspruch, wobei das wenigstens eine Analyseinstrument (120) ferner dazu eingerichtet ist, die Anordnungssteuervorrichtung (200) zu steuern.

12. System (110) zum Bestimmen wenigstens einer Eigenschaft einer gasförmigen Komponente (112) in einem Gasstrom (114), umfassend
- die Anordnung (116) zum Zuführen eines Gasstroms (114) aus einer Probe (118) zu wenigstens einem Analyseinstrument (120) nach einem der vorstehenden Ansprüche; und
- das wenigstens eine Analyseinstrument (120).

13. Verwendung des Systems (110) nach Anspruch 12 zur quantitativen Messung einer gasförmigen Komponente (112) in einem Gasstrom (114).

14. Verfahren (210) zum Zuführen eines Gasstroms (114) aus einer Probe (118) zu wenigstens einem Analyseinstrument (120) unter Verwendung einer Anordnung (116) zum Zuführen des Gasstroms (114) aus der Probe (118) zu dem wenigstens einen Analyseinstrument (120) nach einem der vorstehenden Ansprüche betreffend die Anordnung (116), wobei das Verfahren (210) die folgenden Schritte umfasst:
a) Evakuieren der Anordnung (116) durch Bereitstellen von Zugang zu einem Vakuum (124) unter Verwendung der Vakuumsteuervorrichtung (122); und Beenden des Zugangs zu dem Vakuum (124);
b) Zuführen eines kalibrierten Gaseingangsstroms (129) wenigstens einmal zu dem wenigstens einen Analyseinstrument (120); und Bereitstellen von Zeit zum Durchführen wenigstens einer Kalibriermessung in dem wenigstens einen Analyseinstrument (120) zum Bestimmen wenigstens einer Eigenschaft (220) wenigstens einer gasförmigen Komponente (112) in dem kalibrierten Gaseingangsstrom (129); und
c) Zuführen eines Gasstroms (114) aus der Probe (118) zu der Gaseinlassvorrichtung (126); und Bereitstellen von Zeit zum Durchführen wenigstens einer Messung in dem wenigstens einen Analyseinstrument (120) zum Bestimmen wenigstens einer Eigenschaft (228) wenigstens einer gasförmigen Komponente (112) in dem Gasstrom (114) unter Berücksichtigung der wenigstens einen Eigenschaft (220) der wenigstens einen gasförmigen Komponente (112) in dem kalibrierten Gaseinlassstrom (129).

15. Verfahren (210) nach einem der vorstehenden Verfahrensansprüche, umfassend einen weiteren Schritt zum
d) Bestimmen eines Volumens (224) des Gasstroms (114) unter Verwendung von wenigstens einem von
∘ einer definierten Menge wenigstens eines Inertgases;
∘ dem Kalibriergasbehälter (188); oder
∘ einer Volumensteuervorrichtung (168) nach einem der Ansprüche 8 bis 9.

## Revendications

1. Ensemble (116) servant à fournir un courant de gaz (114) provenant d'un échantillon (118) à au moins un instrument d'analyse (120), comprenant
- un dispositif de contrôle de vide (122) conçu pour contrôler l'accès à un vide (124), comportant
∘ au moins une première vanne (134, 134') conçue pour régler l'accès au vide (124) ;
- un dispositif d'entrée de gaz (126) conçu pour fournir le courant de gaz (114) provenant de l'échantillon (118), comportant
∘ une deuxième vanne (156) conçue pour régler le courant de gaz (114) fourni par l'échantillon (118) ;
- un dispositif d'étalonnage de gaz (128) conçu pour fournir un courant de gaz d'entrée étalonné (129) à l'au moins un instrument d'analyse (120), comportant
∘ une troisième vanne (182) conçue pour régler l'accès à au moins un gaz d'étalonnage, et
∘ un récipient de gaz d'étalonnage (188) conçu pour recevoir une partie de l'au moins un gaz d'étalonnage ; et
- au moins un élément de raccordement (130) conçu pour fournir le courant de gaz (114) sous la forme d'un courant de gaz d'entrée (161) ou du courant de gaz d'entrée étalonné (129) à l'au moins un instrument d'analyse (120), fournissant un accès à
∘ l'au moins un instrument d'analyse (120),
∘ le dispositif de contrôle de vide (122),
∘ le dispositif d'entrée de gaz (126), et
∘ le dispositif d'étalonnage de gaz (128).

2. Ensemble (116) selon la revendication précédente, dans lequel le dispositif d'étalonnage de gaz (128) est en outre conçu pour fournir le courant de gaz (114) provenant de l'échantillon (118), la troisième vanne (182) étant en outre conçue pour régler le courant de gaz (114) fourni par l'échantillon (118).

3. Ensemble (116) selon l'une quelconque des revendications précédentes, dans lequel le dispositif d'étalonnage de gaz (128) comprend en outre au moins un élément parmi
∘ un premier manomètre (190) conçu pour au moins une des opérations suivantes :
▪ enregistrement d'une première pression dans le récipient de gaz d'étalonnage (188) ;
▪ contrôle de la troisième vanne (182) pour régler la première pression dans le récipient de gaz d'étalonnage (188), et
∘ une quatrième vanne (192) conçue pour régler le courant de gaz d'entrée étalonné (129).

4. Ensemble (116) selon l'une quelconque des revendications précédentes, dans lequel le dispositif d'étalonnage de gaz (128) est mis en œuvre sous la forme d'un dispositif séparé du dispositif d'entrée de gaz (126).

5. Ensemble (116) selon l'une quelconque des revendications précédentes, dans lequel le dispositif d'étalonnage de gaz (128) est intégré au dispositif d'entrée de gaz (126).

6. Ensemble (116) selon l'une quelconque des revendications précédentes, dans lequel le dispositif d'entrée de gaz (126) comprend en outre
∘ un élément de couplage (148) conçu pour assurer un couplage avec l'échantillon (118) afin de recevoir le courant de gaz (114) provenant de l'échantillon (118).

7. Ensemble (116) selon l'une quelconque des revendications précédentes, comprenant en outre
- un dispositif de contrôle de gaz (160) conçu pour recevoir un courant de gaz de sortie (131) provenant de l'au moins un instrument d'analyse (120), comportant au moins un élément parmi
∘ au moins une cinquième vanne (162, 162') conçue pour régler une deuxième pression du courant de gaz de sortie (131) ; ou
∘ un dispositif de fermeture conçu pour sceller hermétiquement au moins une sortie de l'au moins un instrument d'analyse.

8. Ensemble (116) selon l'une quelconque des revendications précédentes, comprenant en outre
- un dispositif de contrôle de volume (168) conçu pour déterminer un volume du courant de gaz (114), comportant
∘ au moins une boucle d'échantillon (170) ou le récipient de gaz d'étalonnage (188) conçu pour recevoir un volume connu du courant de gaz (114).

9. Ensemble (116) selon la revendication précédente, dans lequel le dispositif de contrôle de volume (168) comprend en outre un troisième manomètre (180).

10. Ensemble (116) selon l'une quelconque des revendications précédentes, comprenant en outre
- un dispositif de contrôle d'ensemble (200) conçu pour contrôler les courants de gaz dans l'ensemble (116), le dispositif de contrôle d'ensemble (200) étant conçu pour
∘ commuter au moins l'au moins une première vanne (134, 134'), la deuxième vanne (156) et la troisième vanne (182), et
∘ piloter et lire le premier manomètre (190).

11. Ensemble (116) selon la revendication précédente, dans lequel l'au moins un instrument d'analyse (120) est en outre conçu pour contrôler le dispositif de contrôle d'ensemble (200).

12. Système (110) servant à déterminer au moins une propriété d'un composant gazeux (112) dans un courant de gaz (114), comprenant
- l'ensemble (116) servant à fournir un courant de gaz (114) provenant d'un échantillon (118) à au moins un instrument d'analyse (120) selon l'une quelconque des revendications précédentes ; et
- l'au moins un instrument d'analyse (120).

13. Utilisation du système (110) selon la revendication 12 pour une mesure quantitative d'un composant gazeux (112) dans un courant de gaz (114).

14. Procédé (210) destiné à fournir un courant de gaz (114) provenant d'un échantillon (118) à au moins un instrument d'analyse (120) au moyen d'un ensemble (116) servant à fournir le courant de gaz (114) provenant de l'échantillon (118) à l'au moins un instrument d'analyse (120) selon l'une quelconque des revendications précédentes se rapportant à l'ensemble (116), le procédé (210) comprenant les étapes suivantes :
a) évacuation de l'ensemble (116) par fourniture d'un accès à un vide (124) au moyen du dispositif de contrôle de vide (122) ; et interruption de l'accès au vide (124) ;
b) fourniture, au moins une fois, d'un courant de gaz d'entrée étalonné (129) à l'au moins un instrument d'analyse (120) ; et prévision d'un temps pour effectuer au moins une mesure d'étalonnage dans l'au moins un instrument d'analyse (120) afin de déterminer au moins une propriété (220) d'au moins un composant gazeux (112) dans le courant de gaz d'entrée étalonné (129) ; et
c) fourniture du courant de gaz (114) provenant de l'échantillon (118) au dispositif d'entrée de gaz (126) ; et prévision d'un temps pour effectuer au moins une mesure dans l'au moins un instrument d'analyse (120) afin de déterminer au moins une propriété (228) d'au moins un composant gazeux (112) dans le courant de gaz (114) par prise en compte de l'au moins une propriété (220) de l'au moins un composant gazeux (112) dans le courant de gaz d'entrée étalonné (129).

15. Procédé (210) selon l'une quelconque des revendications de procédé précédentes, comprenant une étape supplémentaire de
d) détermination d'un volume (224) du courant de gaz (114) au moyen d'au moins un élément parmi
∘ une quantité définie d'au moins un gaz inerte ; ○ le récipient de gaz d'étalonnage (188) ; ou
∘ un dispositif de contrôle de volume (168) selon l'une quelconque des revendications 8 à 9.
